# EUROPÄISCHE PATENTSCHRIFT

(11) **EP 1 794 204 B1**
(45) Veröffentlichungstag und Bekanntmachung des Hinweises auf die Patenterteilung: **16.03.2011**
(21) Anmeldenummer: 05792028.2
(22) Anmeldetag: 17.09.2005
(51) Int. Cl.: C08G 18/10, C08G 18/75, C08G 83/00, C09D 175/04

(54) **WASSERDISPERGIERBARE, HOCHFUNKTIONELLE POLYISOCYANATE**
WATER-DISPERSIBLE HIGHLY FUNCTIONAL POLYISOCYANATES
POLYISOCYANATE HAUTEMENT FONCTIONNEL DISPERSIBLE DANS L'EAU

(30) Priorität: 23.09.2004 DE 102004046508
(43) Veröffentlichungstag der Anmeldung: 13.06.2007
(73) Patentinhaber: BASF SE, 67056 Ludwigshafen (DE)
(72) Erfinder: WAGNER, Eva, 67346 Speyer (DE); BRUCHMANN, Bernd, 67251 Freinsheim (DE); KÖNIGER, Rainer, Clifton Park, NY 12065 (US); SCHÄFER, Harald, 68219 Mannheim (DE)
(86) Internationale Anmeldenummer: PCT/EP2005/010056
(87) Internationale Veröffentlichungsnummer: WO 2006/032424

(56) Entgegenhaltungen:
- EP-A- 1 026 185
- WO-A-02/081071

## Beschreibung

Die vorliegende Erfindung betrifft gezielt aufgebaute, wasserdispergierbare, hochfunktionelle, hoch- oder hyperverzweigte Polyisocyanate, Verfahren zu ihrer Herstellung sowie ihre Verwendung.

Dendrimere sowie hochfunktionelle, hoch- oder hyperverzweigte Polyisocyanate sind in der Literatur beschrieben.

WO 97/02304 beschreibt Dendrimere, jedoch keine Möglichkeit, diese wasserdispergierbar zu gestalten.

WO 98/52995 beschreibt ebenfalls Dendrimere, jedoch keine Möglichkeit, diese über einen breiten pH-Bereich wasserdispergierbar zu gestalten.

EP-A 1 134 246 und EP-A 1 134 247 beschreiben hochfunktionelle Polyisocyanate. Vorgeschlagen werden allgemeine Möglichkeiten der Hydrophilierung, Hydrophobierung oder Umfunktionalisierung, jedoch keine explizite technische Lehre dazu.

EP-A 1 167 413 und EP-A 1 026 185 beschreiben hochfunktionelle Polyisocyanate. Eine Einstellung der Wasserlöslichkeit bzw. Emulgierbarkeit erfolgt über Addukte mit Säure- oder tertiären Amingruppen, die jedoch lediglich im alkalischen bzw. im sauren Bereich wasseremulgierend wirken.

Der vorliegende Erfindung lag daher die Aufgabe zugrunde, gezielt aufgebaute wasserdispergierbare hochfunktionelle Polyisocyanate bereitzustellen, die aufgrund ihres definierten Aufbaus vorteilhafte Eigenschaften, wie hohe Funktionalität, hohe Reaktivität, geringe Viskosität und/oder gute Löslichkeit, in sich vereinen können und über einen breiten pH-Bereich dispergierbar sein sollen, sowie ein Verfahren zur Herstellung derartiger Polyisocyanate. Die mit derartigen Polyisocyanaten erhaltenen Beschichtungen sollten eine hohe Härte bei einer gleichzeitig geringen Sprödigkeit aufzeigen. Die Aufgabe wird gelöst durch ein Verfahren zur Herstellung von wasserdispergierbaren, hochfunktionellen, hoch- oder hyperverzweigten Polyisocyanaten, umfassend die Reaktionsschritte
(i) Herstellen eines Additionsproduktes (A), das eine oder mehrere Isocyanatgruppen enthält und mindestens eine mit Isocyanat reaktive Gruppe enthält, durch Umsetzen eines
   (I) (a1) Di- und/oder
   (I) (a2) Polyisocyanats
      mit
      (b1) mindestens einer Verbindung mit mindestens drei mit Isocyanat reaktiven Gruppen und/oder
      (b2) mindestens einer Verbindung mit zwei mit Isocyanat reaktiven Gruppen,
         wobei mindestens eine der Komponenten (a) oder (b) funktionelle Gruppen mit gegenüber den funktionellen Gruppen der anderen Komponente unterschiedlicher Reaktivität aufweist und
         wobei das Umsetzungsverhältnis so gewählt wird, dass im Mittel das Additionsprodukt (A) mindestens eine mit Isocyanat reaktive Gruppe und eine oder mehrere Isocyanatgruppen enthält,
(ii) gegebenenfalls intermolekulare Additionsreaktion des Additionsprodukts (A) aus (i) zu einem Polyadditionsprodukt (P), das eine oder mehrere Isocyanatgruppen enthält und mindestens eine mit Isocyanat reaktive Gruppe enthalten kann,
(iii) gegebenenfalls Umsetzen des Additionsproduktes (A) aus (i) und/oder des Polyadditionsprodukts (P) aus (ii), soweit dieses mindestens eine mit Isocyanat reaktive Gruppe enthält, mit einem monofunktionellen Isocyanat, und/oder
(iv) gegebenenfalls Umsetzen des Additionsproduktes (A) aus (i) und/oder des Polyadditionsprodukts (P) aus (ii), soweit dieses mindestens eine mit Isocyanat reaktive Gruppe enthält, mit mindestens einem Di- oder Polyisocyanat (I)(a1) oder (I)(a2) und/oder mindestens einem Di- oder Polyisocyanat (II), das vom Di- oder Polyisocyanat (I) verschieden ist, und
(v) Umsetzen des Additionsproduktes (A) aus (i) und/oder des Polyadditionsprodukts (P) aus (ii) und/oder des Reaktionsproduktes aus (iii) und/oder (iv) mit einem monofunktionellen Polyalkylenoxidpolyetheralkohol.

Die Schritte (ii), (iii), (iv) und (v) können dem Schritte (i) in beliebiger Reihenfolge folgen. Dabei sind die Schritte (ii), (iii) und (iv) optional, der Schritt (i) kann gegebenenfalls auch mehrmals erfolgen.

### Mögliche Abfolgen der Reaktionsschritte sind beispielsweise

(i) - (v), (i) - (ii) - (v), (i) - (v) - (ii), (i) - (iii) - (v), (i) - (v) - (iii), (i) - (iv) - (v), (i) - (v) - (iv), (i) - (ii) - (iii) - (v), (i) - (ii) - (v) - (iii), (i) - (iii) - (ii) - (v), (i) - (iii) - (v) - (ii), (i) - (v) - (ii) - (iii), (i) - (v) - (iii) - (ii), (i) - (ii) - (iv) - (v), (i) - (ii) - (v) - (iv), (i) - (iv) - (ii) - (v), (i) - (iv) - (v) - (ii), (i) - (v) - (ii) - (iv), (i) - (v) - (iv) - (ii), (i) - (iii) - (iv) - (v), (i) - (iii) - (v) - (iv), (i) - (iv) - (iii) - (v), (i) - (iv) - (v) - (iii), (i) - (v) - (iii) - (iv), (i) - (v) - (iv) - (iii), (i) - (v) - (ii) - (iii) - (iv), (i) - (ii) - (v) - (iii) - (iv), (i) - (ii) - (iii) - (v) - (iv) oder (i) - (ii) - (iii) - (iv) - (v),

Zwischen den einzelnen Reaktionsschritten können jeweils Aufarbeitungs- oder Aufreinigungsschritte stattfinden, wie beispielsweise Extraktion, Wäsche, Strippung, Destillation oder Filtration. Falls erforderlich kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 - 50 Gew%, bevorzugt 0,5 bis 25 Gew%, besonders bevorzugt 1 - 10 Gew% bei Temperaturen von beispielsweise 10 bis 100 °C, bevorzugt 20 bis 80 °C und besonders bevorzugt 30 bis 60 °C unterworfen werden. Dies kann durch Zugabe des pulver- oder granulatförmigen Entfärbungsmittels zum Reaktionsgemisch und nachfolgender Filtration oder durch Überleiten des Reaktionsgemisches über eine Schüttung des Entfärbungsmittels in Form beliebiger, geeigneter Formkörper erfolgen.

In einer bevorzugten Ausführungsform der vorliegenden Erfindung werden die einzelnen Reaktionsschritte jedoch in demselben Reaktor durchgeführt, besonders bevorzugt ohne zwischenzeitliche Aufarbeitungs- oder Aufreinigungsschritte. Eine Aufarbeitung oder Aufreinigung erfolgt in diesem Fall gegebenenfalls erst nach dem letzten Reaktionsschritt (v).

Ein weiterer Gegenstand der Erfindung sind die nach diesem Verfahren hergestellten wasserdispergierbaren hochfunktionellen, hoch- oder hyperverzweigten Polyisocyanate.

Dispersion wird in dieser Anmeldung als übergeordneter Begriff gemäß Römpp Chemie Lexikon - CD Version 1.0, Stuttgart/New York: Georg Thieme Verlag, 1995, verwendet und schließt Emulsionen, Suspensionen und Lösungen mit ein.

Weiterhin ist es möglich, mit dem erfindungsgemäßen Verfahren auch dendrimere Polyisocyanate wasserdispergierbar zu gestalten.

Ein Gegenstand der Erfindung ist ferner die Verwendung der erfindungsgemäßen wasserdispergierbaren hochfunktionellen, hoch- oder hyperverzweigten Polyisocyanate als Bausteine zur Herstellung von Lacken, Überzügen, coil coatings, Klebstoffen, Dichtmassen, Gießelastomeren oder Schaumstoffen und Polyadditionsprodukte, erhältlich unter Verwendung der erfindungsgemäßen wasserdispergierbaren, hochfunktionellen, hoch- oder hyperverzweigten Polyisocyanate.

Die erfindungsgemäßen wasserdispergierbaren, hochfunktionellen, hoch- oder hyperverzweigten Polyisocyanate können weiterhin zur Imprägnierung von Leder oder Textilien verwendet werden. Substrate für Imprägnierungen sind z.B. synthetische oder nichtsynthetische Fasern bzw. deren Gewebe oder Vliese.

Hyperverzweigte Polyisocyanate können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chemistry - A European Journal, 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99,9 %, bevorzugt 20 bis 99 %, besonders bevorzugt 20 - 95 % beträgt. Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30 - 35.

Unter einem hochfunktionellen Polyisocyanat ist im Rahmen dieser Erfindung ein Polyisocyanat zu verstehen, das mindestens drei, bevorzugt mindestens fünf, mehr bevorzugt mindestens sechs freie Isocyanatgruppen aufweist. Die Anzahl der Isocyanatgruppen ist prinzipiell nach oben nicht beschränkt, jedoch können Polyisocyanate mit sehr hoher Anzahl an Isocyanatgruppen unerwünschte Eigenschaften, wie beispielsweise hohe Viskosität oder schlechte Löslichkeit, aufweisen. Die hochfunktionellen Polyisocyanate der vorliegenden Erfindung weisen zumeist nicht mehr als 100 Isocyanatgruppen, bevorzugt nicht mehr als 50, besonders bevorzugt nicht mehr als 30 und ganz besonders bevorzugt nicht mehr als 20 Isocyanatgruppen auf. Sie weisen im Mittel bevorzugt nicht weniger als 3,5, bevorzugt nicht weniger als 4,5, ganz besonders bevorzugt nicht weniger als 5 Isocyanatgruppen auf.

Die erfindungsgemäßen Polyisocyanate können auch gegenüber Isocyanat reaktive Gruppen enthalten, im Mittel beispielsweise 0 bis 20, bevorzugt 0 bis 15, besonders bevorzugt 0 bis 10, ganz besonders bevorzugt 0 bis 5 und insbesondere 0 bis 3.

Die erfindungsgemäßen Polyisocyanate haben ein Molekulargewicht M_{w} von mindestens 500, bevorzugt mindestens 600 und besonders bevorzugt 750 g/mol. Die obere Grenze des Molekulargewichts M_{w} ist bevorzugt 100.000 g/mol, besonders bevorzugt beträgt es nicht mehr als 80.000 und ganz besonders bevorzugt nicht mehr als 30.000 g/mol.

Die Angaben zur Polydispersität sowie zum zahlenmittleren und gewichtsmittleren Molekulargewicht Mₙ und M_{w} beziehen sich hier auf gelpermeationschromatographische Messungen, wobei Polymethylmethacrylat als Standard und Tetrahydrofuran als Elutionsmittel verwendet wurde. Die Methode ist im Analytiker Taschenbuch Bd. 4, Seiten 433 bis 442 , Berlin 1984 beschrieben.

Die Polydispersität der erfindungsgemäßen Polyisocyanate beträgt 1,1 bis 50, bevorzugt 1,2 bis 40, besonders bevorzugt 1,3 bis 30 und ganz besonders bevorzugt 1,5 bis 10.

Die erfindungsgemäßen Polyisocyanate sind üblicherweise sehr gut löslich, d.h. man kann bei 25 °C klare Lösungen mit einem Gehalt bis zu 50 Gew.%, in einigen Fällen sogar bis zu 80 Gew.-%, der erfindungsgemäßen Polyisocyanate in Aceton, 2-Butanon, Tetrahydrofuran (THF), Ethylacetat, n-Butylacetat und zahlreichen anderen Lösemitteln darstellen, ohne dass mit bloßem Auge Gelpartikel detektierbar sind. Dies zeigt den geringen Vernetzungsgrad der erfindungsgemäßen Polyisocyanate.

Als Di- und Polyisocyanate (I) kommen die aus dem Stand der Technik bekannten aliphatischen, cycloaliphatischen und aromatischen Isocyanate in Frage.

Diisocyanate (a1) sind solche Isocyanate, die eine Funktionalität von 2, d.h. zwei Isocyanatgruppen pro Molekül, aufweisen. Polyisocyanate (a2) sind solche Isocyanate, die im Mittel mehr als 2, bevorzugt im Mittel mindestens 3 NCO-Gruppen pro Molekül aufweisen.

Bevorzugte Di- oder Polyisocyanate (I) sind 2,4'- und 4,4'-Diphenylmethandüsocyanat (MDI), die Mischungen aus monomeren Diphenylmethandiisocyanaten und höherkernigen Homologen des Diphenylmethandüsocyanats (Polymer-MDI), Tetramethylendiisocyanat, Tetramethylendiisocyanat-Trimere, Hexamethylendiisocyanat, Hexamethylendüsocyanat-Trimere, Isophorondüsocyanat-Trimer, 2,4'- und 4,4'-Methylenbis(cyclohexyl)-diisocyanat, Xylylendiisocyanat, Tetramethylxylylendiisocyanat, Dodecyldiisocyanat, Lysinalkylester-diisocyanat, wobei Alkyl für C₁ bis C₁₀ steht, 2,2,4- oder 2,4,4-Trimethyl-1,6-hexamethylen-diisocyanat, 1,4-Diisocyanatocyclo-hexan, 1,3- oder 1,4-Bis-(isocyanatomethyl)cyclohexan oder 4-Isocyanatomethyl-1,8-octamethylendiisocyanat oder 3 (bzw. 4), 8 (bzw. 9)-Bis-(isocyanatomethyl)-tricyclo[5.2.1.0^{2.6}]decan-Isomerengemische.

Besonders bevorzugt sind Di- oder Polyisocyanate mit NCO-Gruppen unterschiedlicher Reaktivität, wie 2,4-Toluylendiisocyanat (2,4-TDI), 2,4'-Diphenylmethandiisocyanat (2,4'-MDI), Triisocyanatotoluol, Isophorondiisocyanat (IPDI), 2-Butyl-2-ethylpentame-thylendiisocyanat, 2-Isocyanatopropylcyclohexylisocyanat, 3(4)-Isocyanatomethyl-1-methylcyclohexyl-isocyanat, 1,4-Diisocyanato-4-methylpentan, 2,4'-Methylenbis-(cyclohexyl)diisocyanat und 4-Methyl-cyclohexan-1,3-diisocyanat (H-TDI).

Unterschiedliche Reaktivität im Sinne der vorliegenden Erfindung bedeutet einen Reaktivitätsunterschied zwischen den zu differenzierenden reaktiven Gruppen innerhalb des Moleküls unter den Reaktionsbedingungen, so daß der Quotient k₁/k₂ der Geschwindigkeitskoeffizienten k₁ und k₂ der jeweiligen reaktiven Gruppen für die betreffende Reaktion mindestens 1,25, bevorzugt mindestens 1,5, besonders bevorzugt mindestens 2, ganz besonders bevorzugt mindestens 2,5 und insbesondere mindestens 3 beträgt.

Weiterhin sind Isocyanate besonders bevorzugt, deren NCO-Gruppen zunächst gleich reaktiv sind, bei denen sich jedoch durch Erstaddition eines Alkohols, Mercaptans oder Amins an einer NCO-Gruppe ein Reaktivitätsabfall bei der zweiten NCO-Gruppe induzieren läßt. Beispiele dafür sind Isocyanate, deren NCO-Gruppen über ein delokalisiertes Elektronensystem gekoppelt sind, z.B. 1,3- und 1,4-Phenylendiisocyanat, 1,5-Naphthylendiisocyanat, Diphenyldiisocyanat, Tolidindiisocyanat oder 2,6-Toluylendiisocyanat.

Als Di- und Polyisocyanate (II) kommen alle aus dem Stand der Technik bekannten aliphatischen, cycloaliphatischen und aromatischen Isocyanate in Frage. Neben den oben genannten Di- und Polyisocyanaten (I) können weiterhin beispielsweise Oligo- oder Polyisocyanate verwendet werden, die sich aus den genannten Di- oder Triisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen.

Bei dem in die erfindungsgemäße Reaktion eingesetzte Di- oder Polyisocyanat (II) handelt es sich jedoch um ein anderes als das in den Schritt (i) eingesetzte Di- oder Polyisocyanat (I).

In einer bevorzugten Ausführungsform handelt es sich bei der Verbindung (I) um ein Diisocyanat (a1) mit einer Funktionalität von 2 und bei der Verbindung (II) um ein Isocyanat mit einer Funktionalität von mehr als 2, bevorzugt mindestens 2,5, besonders bevorzugt mindestens 2,8 und ganz besonders bevorzugt mindestens 3.

Als Di- und Polyisocyanate (II) werden besonders bevorzugt verwendet 2,4'- und 4,4'-Diphenylmethandiisocyanat, Mischungen aus Diphenylmethandiisocyanaten und höherkernigen Homologen des Diphenylmethandiisocyanats (Polymer-MDI), 1,3- und 1,4-Phenylendiisocyanat, 4-Isocyanatomethyl-1,8-octamethylendiisocyanat, Hexamethylendiisocyanat, Isocyanurat-, Uretdion-, Urethan-, Allophanat-, Iminooxadiazindion- oder Biuretgruppen aufweisende Oligomere aus Hexamethylendiisocyanat oder Isophorondiisocyanat (IPDI), Urethan-, Allophanat-, Carbodiimid- oder Uretonimingruppen aufweisende Oligomere aus MDI oder Urethan-, Allophanat-, Carbodiimid- oder Uretonimingruppen aufweisende Oligomere aus TDI.

Sowohl für die Di- und Polyisocyanate (I) als auch für die Di- und Polyisocyanate (II) können auch Mischungen der genannten Isocyanate verwendet werden.

Als Monoisocyanate kommen z.B. Phenylisocyanat, o-, m- oder p-Tolylisocyanat, Naphthylisocyanat, Phenylsulfonylisocyanat, Toluolsulfonylisocyanat, Butylisocyanat, Hexylisocyanat, Cyclohexylisocyanat oder Dodecylisocyanat in Betracht. Bevorzugt werden Phenylisocyanat, Toluolsulfonylisocyanat und Cyclohexylisocyanat verwendet.

Es spielt für die erfindungsgemäßen Isocyanate keine wesentliche Rolle, auf welchem Wege die Monoisocyanate, Di- und Polyisocyanate (I) oder (II) hergestellt worden sind, d.h. ob sie über ein Phosgenierungsverfahren oder ein phosgenfreies Verfahren erhalten worden sind.

Die bei der Herstellung des Additionsproduktes (A) verwendeten Verbindungen (b1) mit mindestens drei mit Isocyanat reaktiven Gruppen und verwendeten Verbindungen (b2) mit zwei mit Isocyanat reaktiven Gruppen sind aus Verbindungen ausgewählt, die- Hydroxygruppen, Mercaptogruppen und/oder Aminogruppen aufweisen. Bevorzugt sind Hydroxy- und/oder Aminogruppen und besonders bevorzugt Hydroxygruppen.

In einer bevorzugten Ausführungsform enthalten die Verbindungen (b1) mit mindestens drei mit Isocyanat reaktiven Gruppen bevorzugt 3 - 6, besonders bevorzugt 3 - 5, ganz besonders bevorzugt drei oder vier mit Isocyanat reaktive Gruppen.

Ebenfalls können zur Herstellung des Additionsprodukts (A) Verbindungen (b1) mit mindestens drei mit Isocyanat reaktiven Gruppen und/oder Verbindungen (b2) mit zwei mit Isocyanat reaktiven Gruppen verwendet werden, die aus den oben genannten funktionellen Gruppen oder Gemischen davon ausgewählt sind und deren funktionelle Gruppen gegenüber NCO-Gruppen eine unterschiedliche Reaktivität aufweisen. Bevorzugt sind dabei Verbindungen mit mindestens einer primären und mindestens einer sekundären oder tertiären Hydroxygruppe, mindestens einer Hydroxygruppe und mindestens einer Mercaptogruppe oder mindestens einer Hydroxygruppe und mindestens einer Aminogruppe im Molekül, da die Reaktivität der Aminogruppe gegenüber der Hydroxygruppe bei der Umsetzung mit Isocyanat in der Regel deutlich höher ist.

Weiterhin bevorzugt sind mit Isocyanat reaktive Verbindungen, deren mit Isocyanat reaktive funktionellen Gruppen zunächst gleich reaktiv sind, bei denen sich jedoch durch Addition mindestens eines Isocyanates ein Reaktivitätsabfall, bedingt durch sterische oder elektronische Einflüsse, bei den restlichen mit Isocyanat reaktiven Gruppen induzieren läßt. Dies ist beispielsweise bei der Verwendung von Trimethylolpropan oder Pentaerythrit als Komponente (b1) der Fall.

Beispiele für (b1) Verbindungen mit mindestens drei mit Isocyanat reaktiven Gruppen sind Glycerin, Trimethylolmethan, Trimethylolethan, Trimethylolpropan, 1,2,4-Butantriol, Tris(hydroxymethyl)- aminomethan, Tris(hydroxyethyl)aminomethan, 2-Amino-1,3-propandiol, 2-Amino-2-methyl-1,3-propandiol, Diethanolamin, Dipropanolamin, Diisopropanolamin, Ethanolpropanolamin, Bis(aminoethyl)amin, Bis(aminopropyl)amin, Tris(aminoethyl)amin, Tris(aminopropyl)amin, Trisaminononan, Tris-(2-hydroxyethyl) isocyanurat, Pentaerythrit, Dipentaerythrit, Bis(trimethylolpropan), Zuckeralkohole, wie z.B. Sorbit, Mannit, Diglycerol, Threit, Erythrit, Adonit (Ribit), Arabit (Lyxit), Xylit, Dulcit (Galactit), Maltit, Isomaltit, oder Zucker, wie zum Beispiel Glucose, tri- oder höherfunktionelle Polyetherole auf Basis von tri- oder höherfunktionellen Startermolekülen und Ethylenoxid und/oder Propylenoxid und/oder Butylenoxid, oder deren aminogruppenterminierte Derivate, die allgemein bekannt sind als Jeffamine®, oder tri- oder höherfunktionelle Polyesterole. Dabei sind Glycerin, Trimethylolethan, Trimethylolpropan, 1,2,4-Butantriol, Pentaerythrit, Polyetherole auf Basis von Glycerin, Trimethylolpropan oder Pentaerythrit, Diethanolamin, Dipropanolamin und Tris(hydroxymethyl)aminomethan besonders bevorzugt.

Beispiele für (b2) Verbindungen mit zwei mit Isocyanat reaktiven Gruppen sind Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, 1,6-Hexandiol, Hydroxypivalinsäureneopentylglykolester, Propan-1,2-dithiol, Butan-1,2-dithiol, Mercaptoethanol, Mercaptopropanol, Mercaptobutanol, Ethylendiamin, Toluylendiamin, Isophorondiamin, Cysteamin, Ethanolamin, N-Methylethanolamin, 1,2- oder 1,3-Propanolamin, Isopropanolamin, 2-(Butylamino)ethanol, 2-(Cyclohexyl-amino)ethanol, 2-Amino-1-butanol, 2-(2'-Aminoethoxy)ethanol oder höhere Alkoxylierungsprodukte des Ammoniaks, 4-Hydroxypiperidin, 1-Hydroxyethylpiperazin, Aminopropanthiol oder difunktionelle Polyether- oder Polyesterole, sowie difunktionelle Polyetheramine, allgemein bekannt als Jeffamine®. Dabei sind Ethylenglyko1,1,2- und 1,3-Propandiol, 1,2-, 1,3-und 1,4-Butandiol, Ethanolamin, 1,2-Propanolamin, Mercaptoethanol, 4-Hydroxypiperidin und 1-Hydroxyethylpiperazin oder Polyetherole besonders- bevorzugt.

Bei den hier genannten Jeffaminen® der Firma Huntsman handelt es sich um Mono-, Di- oder Triamine, die auf einer Polyetherbasis, Polyethylenoxide, Polypropylenoxide oder gemischte Polyethylenoxide/Polypropylenoxide, beruhen und eine Molmasse bis zu ca. 5000 g/mol aufweisen können.

Beispiele für derartige Monoamine sind die sogenannten Jeffamine® M-Serien, die methylgekappte Polyalkylenoxide mit einer Aminofunktion darstellen, wie M-600 (XTJ-505), mit einem Propylenoxid (PO)/Ethylenoxid (EO)-Verhältnis von ca. 9:1 und einer Molmasse von ca. 600, M-1000 (XTJ-506): PO/EO-Verhältnis 3:19, Molmasse ca. 1000, M-2005 (XTJ-507): PO/EO-Verhältnis 29:6, Molmasse ca. 2000 oder M-2070: PO/EO-Verhältnis 10:31, Molmasse ca. 2000.

Beispiele für derartige Diamine sind die sogenannten Jeffamine® D- oder ED-Serien. Die D-Serie sind aminofunktionalisierte Polypropylendiole aus 3 - 4 1,2-Propyleneinheiten (Jeffamine® D-230, mittlere Molmasse 230), 6 - 7 1,2-Propyleneinheiten (Jeffamine® D-400, mittlere Molmasse 400), im Schnitt ca. 34 1,2-Propyleneinheiten (Jeffamine® D-2000, mittlere Molmasse 2000) oder im Schnitt ca. 69 1,2-Propyleneinheiten (Jeffamine® XTJ-510 (D-4000), mittlere Molmasse 4000). Diese Produkte können teilweise auch als Aminoalkohole vorliegen. Die ED-Serie sind Diamine auf Basis von Polyethylenoxiden, die idealiserterweise beidseitig propoxyliert sind, beispielsweise Jeffamine® HK-511 (XTJ-511) aus 2 Ethylenoxid- und 2 Propylenoxideinheiten mit einer mittleren Molmasse von 220, Jeffamine® XTJ-500 (ED-600) aus 9 Ethylenoxid- und 3,6 Propylenoxideinheiten mit einer mittleren Molmasse von 600 sowie Jeffamine® XTJ-502 (ED-2003) aus 38,7 Ethylenoxid- und 6 Propylenoxideinheiten mit einer mittleren Molmasse von 2000.

Beispiele für Triamine sind Jeffamine® T-403, ein Triamin auf Basis eines mit 5 - 6 1,2-Propyleneinheiten modifizierten Trimethylolpropan, Jeffamine® T-5000, ein Triamin auf Basis eines mit ca. 85 1,2-Propyleneinheiten modifizierten Glycerin sowie Jeffamine® XTJ-509 (T-3000), ein Triamin auf Basis eines mit 50 1,2-Propyleneinheiten modifizierten Glycerin.

Weiterhin sind auch Mischungen der genannten Verbindungen einsetzbar.

Bei der Herstellung des Additionsprodukts (A) ist es notwendig, das Verhältnis von Di-(a1) oder Polyisocyanat (a2) zu Verbindungen (b1) mit mindestens drei mit Isocyanat reaktiven Gruppen oder (b2) Verbindungen mit zwei mit Isocyanat reaktiven Gruppen oder Gemischen aus (b1) und (b2) so einzustellen, dass das resultierende Additionsprodukt (A) Isocyanatgruppen enthalten kann und im Mittel mindestens eine mit Isocyanat reaktive Gruppe enthält.

Beispielsweise liegt bei der Herstellung des Additionsproduktes (A) aus einem Diisocyanat (a1) und einem dreiwertigen Alkohol (b1) das Umsetzungsverhältnis bei 2 : 1, veranschaulicht durch die allgemeine Formel 1, 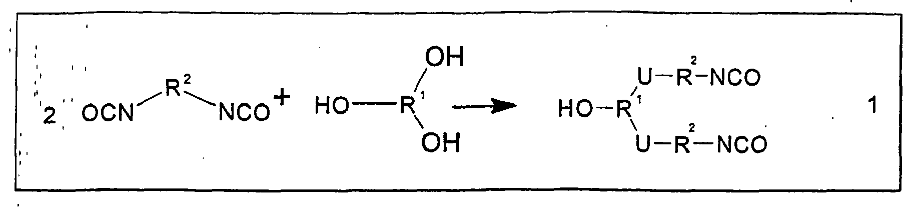 und bei der Herstellung des Additionsproduktes (A) aus einem Diisocyanat (a1) und einem vierwertigen Alkohol als (b1) das Umsetzungsverhältnis bei 3 : 1, schematisch veranschaulicht durch die allgemeine Formel 2, 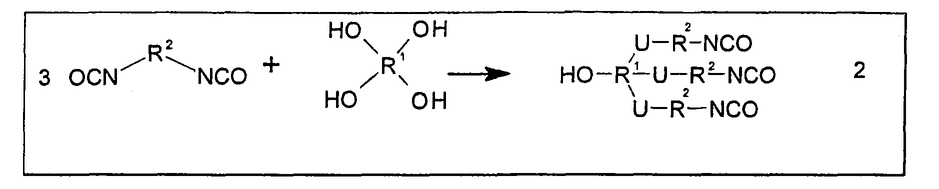 wobei in den Formeln 1 und 2 R¹ und R² einen organischen Rest und U eine Urethangruppe bedeuten.

Weiterhin kann die Herstellung des Additionsprodukts (A) zum Beispiel auch aus einem Triisocyanat (a2) und einer zweiwertigen, mit Isocyanat reaktiven Komponente (b2), veranschaulicht durch die allgemeine Formel 3 erfolgen, wobei das Umsetzungsverhältnis bei molar 1:1 liegt, R¹ und R² die gleiche Bedeutung wie in den Formeln 1 und 2 haben und Y zum Beispiel eine Harnstoffgruppe bedeutet.

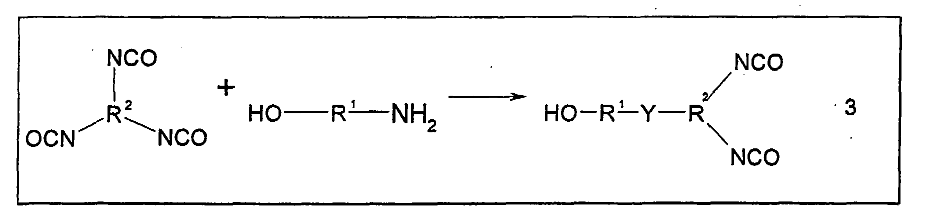

Werden zur Komponente (b1) zusätzlich Verbindungen (b2) mit zwei mit Isocyanat reaktiven Gruppen zugegeben, so bewirkt dies in der Regel eine Verlängerung der Ketten. Wie beispielsweise in der allgemeinen Formel 4 veranschaulicht, muss für jedes Mol der Komponente (b2) ein weiteres Mol an Di- oder Polyisocyanat (a1) oder (a2) (I) zugegeben werden.

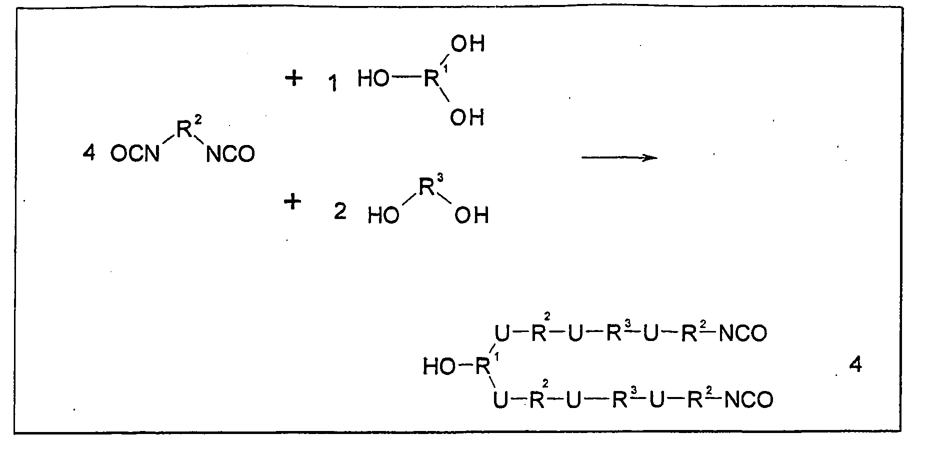

In Formel 4 bedeutet R³ einen organischen Rest, R¹, R² und U sind wie vorstehend beschrieben definiert.

Die Umsetzung zum Additionsprodukt (A) erfolgt üblicherweise bei einer Temperatur von -20 bis 120°C, bevorzugt bei -10 bis 100°C. In einer bevorzugten Ausführungsform wird das Di- (a1) und/oder Polyisocyanat (a2) vorgelegt und die Komponenten (b1) und/oder (b2) oder das Gemisch aus (b1) und (b2) zugegeben. Die Additionsprodukte (A) sind oft nicht über einen längeren Zeitraum stabil und werden daher, falls gewünscht, bevorzugt direkt mit dem Di- oder Polyisocyanat (II) umgesetzt.

In einer bevorzugten Ausführungsform kann das Additionsprodukt (A) durch eine intermolekulare Additionsreaktion des Additionsproduktes (A) in ein Polyadditionsprodukt (P) überführt werden. Hierbei addiert sich eine mit Isocyanat reaktive Gruppe des Additionsproduktes (A), soweit vorhanden, an eine der Isocyanatgruppen eines weiteren Additionsproduktes (A), besonders bevorzugt reagiert eine Hydroxy- und/oder Aminogruppe mit einer Isocyanatgruppe unter Ausbildung einer Urethan- bzw. Harnstoffgruppe. Die Anzahl der Additionsprodukte (A), die sich zu einem Polyadditionsprodukt (P) addieren, ist im allgemeinen nicht beschränkt. Aus praktischen Gesichtspunkten wird üblicherweise die Additionsreaktion abgebrochen, bevor das Polyadditionsprodukt (P), z.B. aufgrund eines zu hohen Molekulargewichts oder aus sterischen Gründen, nachteilige Eigenschaften, wie beispielsweise eine zu hohe Viskosität oder eine zu schlechte Löslichkeit, aufweist.

Aufgrund der Beschaffenheit der Additionsprodukte (A) ist es möglich, daß aus der Additionsreaktion verschiedene Polyadditionsprodukte (P) resultieren können, die Verzweigungen aber im wesentlichen keine Vernetzungen aufweisen. Ferner weisen die Polyadditionsprodukte (P) mehr als zwei Isocyanatgruppen auf und können eine oder mehrere mit Isocyanat reaktive Gruppen aufweisen. Die Anzahl der Isocyanatgruppen ergibt sich dabei aus der Beschaffenheit der eingesetzten Additionsprodukte (A) und Beispielsweise kann ein Additionsprodukt (A) gemäß der allgemeinen Formel 1 durch dreifache intermolekulare Addition zu zwei verschiedenen Polyadditionsprodukten (P), die in den allgemeinen Formeln 5 und 6 wiedergegeben werden, reagieren.

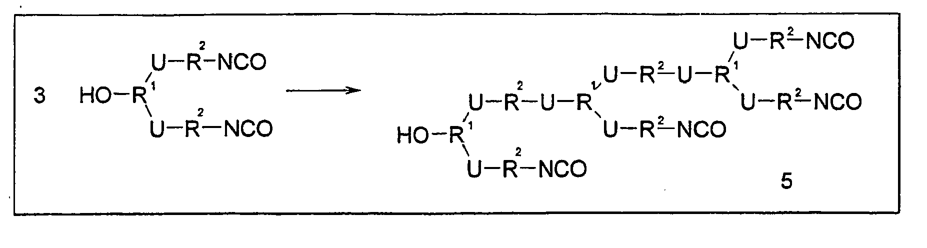

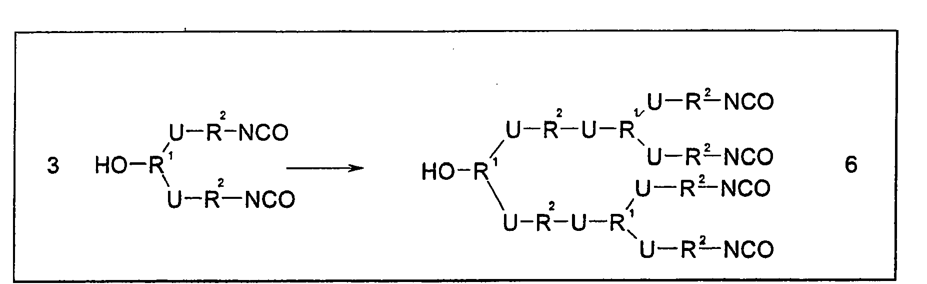

In Formel 5 und 6 sind R¹, R² und U wie vorstehend definiert.

Die intermolekulare Polyadditionsreaktion eines Additionsproduktes (A) zu einem Polyadditionsprodukt (P) kann üblicherweise und bevorzugt in situ nach Beendigung der Reaktion zu dem Additionsprodukt (A) durch eine Temperaturerhöhung durchgeführt werden, wenn das Additionsprodukt mindestens eine, bevorzugt genau eine gegenüber Isocyanat reaktive Gruppe aufweist.

Ferner ist es auch möglich, sowohl durch Zugabe eines geeigneten Katalysators, als auch durch Wahl einer geeigneten Temperatur die intermolekulare Polyadditionsreaktion zu steuern.

Weiterhin kann zur Beschleunigung auch ein geeigneter Katalysator oder ein geeignetes Katalysatorgemisch zugegeben werden. Geeignete Katalysatoren sind im allgemeinen Verbindungen, die Urethan-Reaktionen katalysieren, zum Beispiel Amine, Ammoniumverbindungen, Aluminium-, Zinn-, Titan-, Zirkon-, oder Wismut-organische oder Cäsium-Verbindungen.

Beispielsweise können genannt werden Diazabicyclooctan (DABCO), Diazabicyclononen (DBN) und Diazabicycloundecen (DBU), Titan-tetrabutylat, Dibutylzinn-dilaurat, Zirkonacetylacetonat oder Gemische davon.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinndilaurat, Zirkon-Acetylacetonat und Zirkon-2,2,6,6-tetramethyl-3,5-heptandionat.

Als Cäsiumverbindungen kommen dabei solche Verbindungen in Betracht, in denen folgende Anionen eingesetzt werden: F⁻, Cl⁻, ClO⁻, ClO₃, ClO₄, Br⁻, J⁻, JO₃-, CN⁻, OCN⁻, NO₂⁻, NO₃⁻, HCO₃⁻, CO₃²⁻, S²⁻, SH⁻, HSO₃⁻, SO₃²⁻, HSO₄⁻, SO4²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Die Zugabe des Katalysators erfolgt im allgemeinen in einer Menge von 50 bis 10.000, bevorzugt von 100 bis 5.000 Gew. ppm bezogen auf die Menge des eingesetzten Isocyanats.

Zum Abbruch der intermolekularen Polyadditionsreaktion gibt es verschiedene Möglichkeiten. Beispielsweise kann die Temperatur auf einen Bereich abgesenkt werden, in dem die Additionsreaktion zum Stillstand kommt und das Additionsprodukt (A) oder das Polyadditionsprodukt (P) lagerstabil ist.

In einer bevorzugten Ausführungsform wird, sobald aufgrund der intermolekularen Additionsreaktion des Additionsproduktes (A) ein Polyadditionsprodukt (P) mit gewünschten Polyadditionsgrad vorliegt, dem Polyadditionsprodukt (P) zum Abbruch der Polyadditionsreaktion ein Monoisocyanat oder ein Di- oder Polyisocyanat (II) zugegeben. Durch Umsetzung des Polyadditionsprodukts (P) mit dem Monoisocyanat oder dem Di- oder Polyisocyanat (II) erhält man die erfindungsgemäßen hochfunktionellen Polyisocyanate.

Wird beispielsweise mit einem Polyadditionsprodukt (P) der allgemeinen Formel 5 ein Diisocyanat (II) im Verhältnis (P) : (II) = 2 :1 umgesetzt, so ist ein erfindungsgemäßes hochfunktionelles Polyisocyanat der allgemeinen Formel 7 erhältlich.

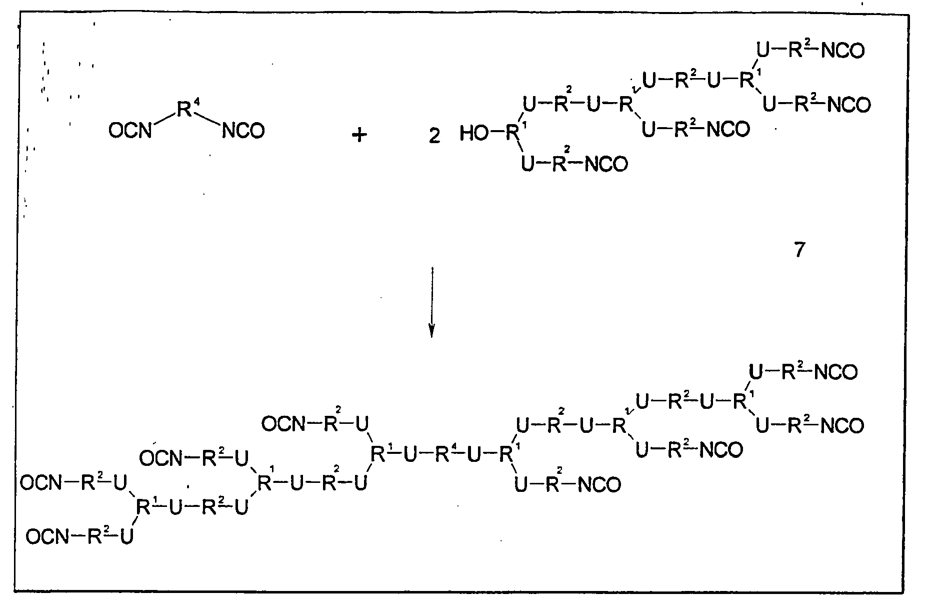

In Formel 7 sind R¹, R² und U wie vorstehend definiert und R⁴ bedeutet einen organischen Rest, der vorzugsweise nicht mit R² identisch ist.

Alternativ kann das Di- oder Polyisocyanat (II) auch zu einem Additionsprodukt (A) gegeben werden, das noch nicht in einer intermolekularen Additionsreaktion zu einem Polyadditionsprodukt (P) umgesetzt wurde.

Es ist jedoch zumeist technisch vorteilhaft, die intermolekulare Additionsreaktion zumindest in geringen Umfang durchzuführen, da gegebenenfalls im Additionsprodukt (A) noch geringe Mengen Di- oder Polyisocyanat (I) als Verunreinigung enthalten sein können und diese Verunreinigungen dann durch die intermolekulare Polyadditionsreaktion in das Polyadditionsprodukt (P) mit eingebaut werden können.

Die nach dem beschriebenen Verfahren hergestellten Polyisocyanate können in an sich bekannter Weise, beispielsweise durch Dünnschichtdestillation bei einer Temperatur von 100 bis 180 °C, gegebenenfalls im Vakuum, gegebenenfalls zusätzlich mit Durchleiten von inertem Strippgas, oder Extraktion von gegebenenfalls vorhandenen Lösungs- oder Verdünnungsmittel und/oder vorzugsweise von überschüssigen, nichtumgesetzten (cyclo)aliphatischen Diisocyanaten (I) befreit werden, so daß die Polyisocyanate mit einem Gehalt an monomeren Diisocyanaten von z.B. unter 1,0 Gew.-%, vorzugsweise unter 0,5 Gew.-%, besonders bevorzugt unter 0,3, ganz besonders bevorzugt unter 0,2 und insbesondere nicht mehr als 0,1 Gew% erhältlich sind.

Bei der Umsetzung des Additionsproduktes (A) und/oder des Polyadditionsprodukts (P) mit dem Di- oder Polyisocyanat (II) wird üblicherweise mindestens eine Isocyanatgruppe des Di- oder Polyisocyanats (II) mit der mit Isocyanat reaktiven Gruppe des Additionsprodukts (A) oder des Polyadditionsprodukts (P) zur Reaktion gebracht. In einer bevorzugten Ausführungsform werden mindestens 10 %, insbesondere mindestens 40 % und besonders bevorzugt 50 - 100% der freien Isocyanatgruppen des Di- oder Polyisocyanats (II) mit einer entsprechenden Anzahl an Äquivalenten eines Additionsproduktes (A) und/oder Polyadditionsprodukts (P) zu dem erfindungsgemäßen hochfunktionellen Polyisocyanat umgesetzt.

In einer weiteren Ausführungsform wird zuerst eine Isocyanatgruppe eines Di- oder Polyisocyanats (II) mit einem Additionsprodukt (A1) oder einem Polyadditionsprodukt (P1) umgesetzt, anschließend wird mindestens eine weitere Isocyanatgruppe des Di- oder Polyisocyanats (II) mit einem Additionsprodukt (A2) oder einem Polyadditionsprodukt (P2) umgesetzt, wobei die Additionsprodukte (A1) und (A2) bzw. die Polyadditionsprodukte (P1) und (P2) nicht identisch sind. Für diese Ausführungsform wird vorzugsweise ein Di- oder Polyisocyanat (II) verwendet, das Isocyanatgruppen mit unterschiedlicher Reaktivität gegenüber den mit Isocyanat reaktiven Gruppen der Komponenten (A) und/oder (P) aufweist.

Die Herstellung der erfindungsgemäßen hochfunktionellen Polyisocyanate erfolgt zumeist in Lösungsmitteln. Dabei können im allgemeinen alle Lösungsmittel verwendet werden, die gegenüber den jeweiligen Edukten inert sind. Bevorzugt verwendet werden organische Lösungsmittel, wie zum Beispiel Diethylether, Tetrahydrofuran, Aceton, Butanon-2, Methylisobutylketon, Essigester, Butylacetat, Benzol, Toluol, Chlorbenzol, Xylol, Methoxyethylacetat, Methoxypropylacetat, Dimethylformamid, Dimethylacetamid, oder Solventnaphtha.

Weitere Beispiele sind Ketone wie Aceton, 2-Butanon, 2-Pentanon, 3-Pentanon, Hexanon, iso-Butylmethylketon, Heptanon, Cyclopentanon, Cyclohexanon oder Cycloheptanon.

Weitere Beispiele sind Ether wie Dioxan oder Tetrahydrofuran, Beispiele für Ester sind Alkoxyalkylcarboxylate wie z.B. Triethylenglykoldiacetat, Butylacetat, Ethylacetat, 1-Methoxypropyl-2-acetat, Propylenglykoldiacetat, ferner können auch 2-Butanon oder 4-Methyl-2-pentanon eingesetzt werden.

Besonders bevorzugt sind ein- oder mehrfach alkylierte Benzole und Naphthaline sowie deren Gemische.

Als aromatische Kohlenwasserstoffgemische sind solche bevorzugt, die überwiegend aromatische C₇- bis C₁₄-Kohlenwasserstoff umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besondes Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C,) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Denkbar sind auch Trimethylphosphat, Tri-n-butylphosphat und Triethylphosphat oder beliebige Mischungen dieser Verbindungen.

Die Herstellung der erfindungsgemäßen hochfunktionellen Polyisocyanate erfolgt zumeist in einem Druckbereich von 2 mbar bis 20 bar, bevorzugt bei Normaldruck, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

Die Isocyanatgruppen der erfindungsgemäßen hochfunktionellen Polyisocyanate können auch in verkappter Form vorliegen. Als Verkappungsmittel für NCO-Gruppen eignen sich zum Beispiel Oxime, Phenole, Imidazole, Triazole, Pyrazole, Pyrazolinone, Diketopiperazine, Caprolactam, Malonsäureester oder Verbindungen, wie sie genannt sind in den Veröffentlichungen von Z. W. Wicks, Prog. Org. Coat. 3 (1975), 73 - 99 und Prog. Org. Coat. 9 (1981), 3 - 28 sowie in Houben-Weyl, Methoden der Organischen Chemie, Band XIV/2, 61 ff., Georg Thieme Verlag, Stuttgart 1963; oder tert.-Butyl-benzylamin, wie es z.B. beschrieben ist in der DE-A1 102 26 925.

Im Schritt (v) wird das Additionsprodukt (A) und/oder das Polyadditionsprodukt (P) aus einem der vorstehenden Schritte mit einem monofunktionellen Polyalkylenoxidpolyetheralkohol, der durch Alkoxylierung geeigneter Startermoleküle erhältlich ist, umgesetzt. Dabei kann der Schritt (v) falls gewünscht auch vor dem Schritt (iii) oder (iv) ausgeführt werden.

Geeignete Startermoleküle zur Herstellung einwertiger Polyalkylenoxidpolyetheralkohole sind Thiolverbindungen, Monohydroxyverbindungen der allgemeinen Formel

R⁵-O-H

oder sekundäre Monoamine der allgemeinen Formel

R⁶R⁷N-H,

in welchen
R⁵, R⁶ und R⁷ unabhängig voneinander unabhängig voneinander jeweils C₁-C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂-C₁₈-Alkyl, C₆-C₁₂-Aryl, C₅-C₁₂-Cycloalkyl oder einen fünf- bis sechsgliedrigen, Sauerstoff-, Stickstoff- und/oder Schwefelatome aufweisenden Heterocyclus bedeutet oder R⁶ und R⁷ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt sind R⁵, R⁶ und R⁷ unabhängig voneinander C₁- bis C₄-Alkyl, d.h. Methyl, Ethyl, *iso*-Propyl, *n*-Propyl, *n*-Butyl, *iso*-Butyl, *sek*-Butyl oder *tert*-Butyl, besonders bevorzugt sind R⁵, R⁶ und R⁷ Methyl.

Beispielsweise geeignete einwertige Startermoleküle können gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxy-methyloxetan, oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-butylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1H-Pyrazol, sowie Aminoalkohole wie 2-Dimethylaminoethanol, 2-Diethylaminoethanol, 2-Diisopropylaminoethanol, 2-Dibutylaminoethanol, 3-(Dimethylamino)-1-propanol oder 1-(Dimethylamino)-2-propahol.

Für die Alkoxylierungsreaktion geeignete Alkylenoxide sind Ethylenoxid, Propylenoxid, iso-Butylenoxid, Vinyloxiran und/oder Styroloxid, die in beliebiger Reihenfolge oder auch im Gemisch bei der Alkoxylierungsreaktion eingesetzt werden können.

Bevorzugte Alkylenoxide sind Ethylenoxid, Propylenoxid und deren Gemische, besonders bevorzugt ist Ethylenoxid.

Bevorzugte Polyetheralkohole sind solche auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel in der Regel mindestens 2 Alkylenoxideinheiten, bevorzugt 5 Ethylenoxideinheiten, pro Molekül auf, besonders bevorzugt mindestens 7, ganz besonders bevorzugt mindestens 10 und insbesondere mindestens 15.

Die einwertigen Polyalkylenoxidpolyetheralkohole weisen im statistischen Mittel in der Regel bis zu 50 Alkylenoxideinheiten, bevorzugt Ethylenoxideinheiten, pro Molekül auf, bevorzugt bis zu 45, besonders bevorzugt bis zu 40 und ganz besonders bevorzugt bis zu 30.

Das Molgewicht der einwertigen Polyalkylenoxidpolyetheralkohole beträgt bevorzugt bis zu 4000, besonders bevorzugt nicht über 2000 g/mol, ganz besonders bevorzugt nicht unter 500 und insbesondere 1000 ± 200 g/mol.

Bevorzugte Polyetheralkohole sind somit Verbindungen der Formel

R⁵-O-[-Xᵢ-]ₖ-H

worin
R⁵ die oben genannten Bedeutungen hat,
k für eine ganze Zahl von 5 bis 40, bevorzugt 7 bis 45 und besonders bevorzugt 10 bis 40 steht und
jedes Xᵢ für i = 1 bis k unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-
worin Ph für Phenyl und Vin für Vinyl steht.

Zur Durchführung des Schrittes (v) werden die Ausgangskomponenten (A) und/oder (P) bei Temperaturen von 40 bis 180°C, vorzugsweise 50 bis 150°C, unter Einhaltung eines NCO-/OH-Äquivalentverhältnisses von 1 : 1 bis 100 : 1, vorzugsweise von 1 : 1 bis 50 : 1, besonders bevorzugt 1,5 : 1 bis 20 : 1 miteinander umgesetzt.

Dabei muß das für den Schritt (v) eingesetzte Material NCO-Gruppen aufweisen, bevorzugt eine NCO-Zahl gemäß DIN 53185 von mindestens 1 Gew%, besonders bevorzugt mindestens 2 Gew% und ganz besonders bevorzugt mindestens 5 Gew%.

Bevorzugt werden von den im Additions- (A) bzw. Polyadditionsprodukt (P) vorliegenden Isocyanatgruppen bis zu 50 % mit einen Polyetheralkohol umgesetzt, besonders bevorzugt bis zu 40 %, ganz besonders bevorzugt bis zu 30 %, insbesondere bis zu 25 % und speziell bis zu 20 %. Die vorhandenen Isocyanatgruppen werden zu mindestens 1 mol%, bevorzugt zu mindestens 2 mol%, besonders bevorzugt zu mindestens 3 mol%, ganz besonders bevorzugt zu mindestens 4 mol%, insbesondere zu mindestens 5 mol% und speziell zu mindestens 7 mol% umgesetzt.

Die Reaktionsdauer beträgt in der Regel 10 min bis 5 Stunden, bevorzugt 15 min bis 4 Stunden, besonders bevorzugt 20 bis 180 min und ganz besonders bevorzugt 30 bis 120 min.

Zur Beschleunigung der Reaktion können gegebenenfalls geeignete Katalysatoren eingesetzt werden.

Hierbei handelt es sich um die üblichen für diese Zwecke bekannten Katalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Katalysatoren sind insbesondere Zinkverbindungen, wie z. B. Zink-(II)-stearat, Zink(II)-n-octanoat, Zink-(II)-2-ethyl-I-hexanoat, Zink-(II)-naphthenat oder Zink-(II)-acetylacetonat, Zinnverbindungen, wie z. B. Zinn(II)-n-octanoat, Zinn-(II)-2-ethyl-I-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminium-tri(ethylacetoacetat), Eisen-(III)-chlorid, Kaliumoctoat, Mangan-, Cobalt- oder Nicketverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Weiterhin können die oben zur Katalyse der Urethanisierung eingesetzten Katalysatoren auch hier eingesetzt werden, bevorzugt Alkalimetallhydroxide und -carboxylate, besonders bevorzugt Natrium- und Kaliumhydroxid und -carboxylat, ganz besonders bevorzugt Natrium- und Kaliumhydroxid und -acetat und insbesondere Kaliumhydroxid und Kaliumacetat.

In Abhängigkeit vom eingesetzten Katalysator können sich auch Allophanatgruppen bilden.

Die Reaktion zur Herstellung der erfindungsgemäßen Polyurethanzubereitung kann auch in Anwesenheit von Cäsiumsalzen erfolgen, wie in der DE 10161156 beschrieben. Bevorzugte Cäsiumsalze sind dabei Verbindungen, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻ S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Ganz besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Die Cäsiumsalze werden in Mengen von 0,01 bis 10 mmol Cäsiumsalz pro kg lösungsmittelfreier Ansatz eingesetzt. Bevorzugt werden sie in Mengen von 0,05 bis 2 mmol Cäsiumsalz pro kg Iösungsmittelfreier Ansatz verwendet.

Die Cäsiumsalze können dem Ansatz in fester Form, bevorzugt jedoch in gelöster Form zugesetzt werden. Als Lösemittel sind polare, aprotische Lösemittel oder auch protische Lösemittel geeignet.

Geeignete, wenngleich weniger bevorzugte Katalysatoren für das Verfahren sind auch solche Katalysatoren, wie sie beispielsweise in der EP-A-0 649 866 Seite 4, Zeile 7 bis Seite 5, Zeile 15 beschrieben sind.

Bevorzugte Katalysatoren für das erfindungsgemäße Verfahren sind Zinkverbindungen der obengenannten Art. Ganz besonders bevorzugt ist die Verwendung von

Zink-(II)-n-octanoat, Zink-(II)-2-ethyl-I-hexanoat und/oder Zink-(II)-stearat. Ganz besonders bevorzugt ist die Verwendung von Dibutylzinndilaurat.

Diese Katalysatoren kommen, falls überhaupt, in einer Menge von 0,001 bis 5 Gew.-%, vorzugsweise 0,005 bis 1 Gew.-%, bezogen auf das Gesamtgewicht der Reaktionspartner zum Einsatz.

Die Zugabe zum Reaktionsgemisch kann dabei nach beliebigen Methoden erfolgen. So ist es beispielsweise möglich, den gegebenenfalls mitzuverwendenden Katalysator entweder der Polyisocyanatkomponente (A), (P) und/oder der Polyetheralkohol vor Beginn der eigentlichen Umsetzung zuzumischen. Ebenso ist es möglich, den Katalysator dem Reaktionsgemisch zu einem beliebigen Zeitpunkt während der Reaktion oder im Sinne einer zweistufigen Reaktionsführung auch im Anschluß an die Urethanisierung, d. h. wenn der einem vollständigen Umsatz von Isocyanat und Hydroxygruppen theoretisch entsprechende NCO-Gehalt erreicht ist, zuzusetzen.

Falls ein Katalysator zur Katalyse der Reaktion im eingesetzten Edukt enhalten ist, so kann auf die Zugabe von Katalysator ganz oder teilweise verzichtet werden. Dies ist beispielsweise dann der Fall, wenn die Reaktion im Schritt (i) durch einen geeigneten Katalysator katalysiert wurde und dieser noch im Reaktionsgemisch, das in den Schritt (v) eingesetzt wurde, enthalten ist. Des weiteren ist dies denkbar, wenn der eingesetzte Polyetheralkohol noch geringe Mengen von beispielsweise Kaliumhydroxid oder Kaliumacetat enthält, die die Herstellung des Polyetheralkohols katalysieren oder bei dessen Aufarbeitung eingesetzt werden oder anfallen und sich noch im Produkt befinden.

Die Reihenfolge der Vermischung der Komponenten (A), (P) und Polyetheralkohol ist dabei erfindungsgemäß nicht wesentlich, beispielsweise können die Komponenten gleichmäßig miteinander vermischt werden, Polyetheralkohol zumindest teilweise vorgelegt und (A) und/oder (P) dazu hinzugegeben werden oder (A) oder (P) zumindest teilweise vorgelegt, Polyetheralkohol hinzugegeben und die letzte Komponente hinzugegeben werden.

Der Verlauf der Umsetzung kann durch z. B. titrimetrische Bestimmung des NCO-Gehaltes gemäß DIN 53185 verfolgt werden. Nach Erreichen des angestrebten NCO-Gehaltes wird die Reaktion abgebrochen. Dies kann bei rein thermischer Reaktionsführung beispielsweise durch Abkühlen des Reaktionsgemisches auf Raumtemperatur erfolgen. Bei der Verwendung eines Katalysators der genannten Art wird die Umsetzung im allgemeinen aber durch Zugabe geeigneter Desaktivatoren abgestoppt. Als Desaktivatoren eignen sich beispielsweise anorganische oder organische Säuren, die entsprechenden Säurehalogenide und Alkylierungsmittel. Beispielhaft genannt seien

Phosphorsäure, Monochloressigsäure, Dodecylbenzolsulfonsäure, Benzoylchlorid, Dimethylsulfat und vorzugsweise Dibutylphosphat sowie Di-2-ethylhexylphosphat. Die Desaktivierungsmittel können in Mengen von 1 bis 200 Mol-%, vorzugsweise 20 bis 100 Mol-%, bezogen auf die Mole an Katalysator, eingesetzt werden.

Die resultierenden Polyisocyanatgemische weisen in der Regel einen NCO-Gehalt von vorzugsweise 2,0 bis 23,0 Gew.-%, besonders bevorzugt 4,0 bis 22,0 Gew.-% auf.

Die resultierenden Polyisocyanatgemische weisen in der Regel eine Viskosität bei 23 °C von bis zu 50 Pas auf, bevorzugt bis zu 40, besonders bevorzugt bis zu 30, ganz besonders bevorzugt bis zu 20 und insbesondere bis zu 15 Pas.

Die resultierenden Polyisocyanatgemische weisen in der Regel eine Viskosität bei 23 °C von mindestens 0,2 Pas auf, bevorzugt mindestens 0,3, besonders bevorzugt mindestens 1, ganz besonders bevorzugt mindestens 2 und insbesondere mindestens 5 Pas.

Die resultierenden Polyisocyanatgemische können auch fest sein. In diesem Fall können sie beispielsweise durch Erwärmen auf eine Temperatur oberhalb der Glasübergangstemperatur verflüssigt werden oder als Lösung in einem geeigneten Lösungsmittel eingesetzt werden, beispielsweise in einem der oben genannten Lösungsmittel, bevorzugt in Butylacetat, Butanon, iso-Butylmethylketon, Methoxypropylacetat, Aceton oder Essigsäureethylester.

Das Verfahren kann gegebenenfalls in einem geeigneten, gegenüber Isocyanatgruppen inerten Lösemittel durchgeführt werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, *iso*-Butylmethylketon, 4-Methyl-2-pentanon, Cyclohexanon, Cyclopentanon, Toluol, Xylol, Chlorbenzol, Testbenzin, höher substituierte Aromaten, wie sie beispielsweise unter den Bezeichnungen Solventnaphtha®, Solvesso®, Shellsol®, Isopar®, Nappar® und Diasol® im Handel sind, Propylenglykoldiacetat, Diethylenglykoldimethylether, Dipropylenglykoldimethylether, Diethylenglykolethyl- und -butyletheracetat, N-Methylpyrrolidon und N-Methylcaprolactam, sowie bevorzugt Kohlensäureester oder Lactone, die in der EP-A1 697 424, S. 4, Z. 4 bis 32 genannt sind, besonders bevorzugt Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch oder beliebige Gemische solcher Lösemittel.

Es ist auch möglich, die Herstellung der erfindungsgemäßen Isocyanate zunächst ohne Lösemittel durchzuführen und das so erhältliche Produkt anschließend in einem Lösemittel aufzunehmen.

Die mit den erfindungsgemäßen Polyisocyanaten hergestellten dispergierten Teilchen weisen in der Regel eine mittlere Teilchengröße (z-Mittelwert), gemessen mittels dynamischer Lichtstreuung mit dem Malvern® Autosizer 2 C, im allgemeinen <1000 nm, bevorzugt <500 nm und besonders bevorzugt < 100 nm. Im Normalfall beträgt der Durchmesser 20 bis 80 nm.

Zur Herstellung der Dispersionen mit erfindungsgemäßen Polyisocyanaten reichen in den meisten Fällen einfache Dispergiertechniken, z.B. mit einem mechanischen Rührer, beispielsweise Scheiben-, Schrägblatt-, Anker-, Intensiv- oder Begasungsrührer, oder oftmals auch eine einfache Mischung der beiden Komponenten per Hand oder durch Schütteln aus, um Dispersionen mit sehr guten Eigenschaften zu erzielen. Selbstverständlich können aber auch Mischtechniken mit höherer Scherenergie, wie z.B. Strahldispergierung, Intensiv-, Ultraturrax- oder Ultraschalldispergierung, eingesetzt werden.

Die erfindungsgemäßen Mischungen können selbstverständlich mit üblichen Hilfs- und Zusatzmitteln der Lacktechnologie versetzt werden. Hierzu gehören beispielsweise Entschäumer, Verdicker, Verlaufshilfsmittel, Pigmente, Emulgatoren, Dispergierhilfsmittel und auch Lösemittel. Die gewünschte Verarbeitungsviskosität wird durch Zugabe von Wasser eingestellt.

Ein weiterer Gegenstand der vorliegenden Erfindung ist die Verwendung der erfindungsgemäßen wasserdispergierbaren, hochfunktionellen, hoch- oder hyperverzweigten Polyisocyanate in Polyurethandispersion sowie diese Polyurethandispersion. In einer bevorzugten Ausführungsform können diese Polyurethandispersion noch mit weiteren niederviskosen Polyisocyanaten abgemischt werden, bevorzugt solchen mit einer Viskosität bis zu 1200 mPas, besonders bevorzugt solchen mit einer Viskosität bis zu 700 mPas und ganz besonders bevorzugt solchen mit einer Viskosität bis zu 300 mPas. Als derartige Polyisocyanate kommen alle im Stand der Technik bekannten aliphatischen, cycloaliphatischen und aromatischen Isocyanate in Frage, insbesondere solche mit Allophanat-, Isocyanurat- und/oder asymmetrischen Isocyanuratgruppen in Frage.

Als Reaktionspartner für die erfindungsgemäßen wasserdispergierbaren, hochfunktionellen, hoch- oder hyperverzweigten Polyisocyanate in Beschichtungsmassen oder Polyurethandispersionen sind prinzipiell alle in Wasser dispergierbaren Bindemittel geeignet, die gegenüber Polyisocyanaten reaktive Gruppen aufweisen.

Solche Bindemittel sind beispielsweise Polyacrylatpolyole, Polyesterpolyole, Polyetherpolyole, Polyurethanpolyole, Polyharnstoffpolyole, Polyesterpolyacrylatpolyole, Pölyesterpolyure-thanpolyole, Polyurethanpolyacrylatpolyole, Polyurethanmodifizierte Alkydharze, Fettsäuremodifizierte Polyesterpolyurethanpolyole, Kopolyrmerisate mit Allylethern, Propfpolymerisate aus den genannten Stoffgruppen mit z.B. unterschiedlichen Glasübergangstemperaturen, sowie Mischungen der genannten Bindemittel. Bevorzugt sind Polyacrylatpolyole, Polyesterpolyole und Polyetherpolyole. Auch können zusätzlich Melaminformaldehyd-Harze zugegeben werden. Die Isocyanatgruppen der erfindungsgemäßen hochfunktionellen Polyisocyanate können auch in verkappter Form vorliegen.

In einer besonders bevorzugten Ausführungsform liegen die Polyolkomponenten als Dispersionen vor, beispielsweise als Primär- oder als Sekundärdispersionen. Beispielsweise kann es sich um solche dispergiert vorliegenden Polyolkomponenten handeln, wie sie beschrieben sind in DE-A1 42 06 044, S. 3, Z. 1 bis S. 4, Z. 30, worauf hiermit ausdrücklich Bezug genommen wird.

Die Molmassen unterliegen grundsätzlich keiner Einschränkung.

Derartige Polyacrylatpolyole, Polyesterole und/oder Polyetherole weisen in Sekundärdispersionen bevorzugt ein Molekulargewicht Mₙ von mindestens 500, besonders bevorzugt mindestens 1000, ganz besonders bevorzugt mindestens 2000 und insbesondere mindestens 5000 g/mol auf. Das Molekulargewicht Mₙ kann beispielsweise bis 200.000, bevorzugt bis zu 100.000, besonders bevorzugt bis zu 80.000 und ganz besonders bevorzugt bis zu 50.000 g/mol betragen. Bei Acrylatdispersionen kann Mn auch bis zu 1.000.000 betragen.

Im Fall von Primärdispersionen eines Polymerisats olefinisch ungesättigter Monomere wie Polyacrylaten kann das Molekulargewicht beispielsweise bis zu 1.500.000 g/mol, bevorzugt nicht über 1.000.000, besonders bevorzugt nicht über 500.000 g/mol betragen.

Die Dispersionen werden zum Beispiel mit ionischen Gruppen oder in ionische Gruppen überführbare Gruppen dispergierbar gemacht. Bevorzugt sind Carbonsäure-, Sulfonsäure-, respektive Carboxylat- und/oder Sulfonat-Gruppen.

Es kann eine Neutralisation der Dispersionen der erfindungsgemäßen Polyisocyanate und der genannten Bindemittel erfolgen, bevorzugt mit Aminen, bevorzugt mit Dimethylethanolamin; Triethylamin; Ethyldüsopropylamin, Aminomethylpropanol oder Ammoniak. Ammoniak ist bei Primärdispersionen besonders bevorzugt.

Die die erfindungsgemäßen Mischungen enthaltenden Beschichtungsmittel können insbesondere als Grundierungen, Füller, pigmentierte Decklacke und Klarlacke im Bereich Industrie-, insbesondere Flugzeug- oder Großfahrzeuglackierung, Holz-, Auto-, insbesondere OEM- oder Autoreparaturlackierung, oder Dekolackierung eingesetzt werden. Besonders geeignet sind die Beschichtungsmittel für Anwendungen, in denen eine besonders hohe Applikationssicherheit, Außenwitterungsbeständigkeit, Optik, Lösemittel- und/oder Chemikalienfestigkeit gefordert werden.

Dir Topfzeiten der erfindungsgemäßen Beschichtungsmasse oder Polyurethandispersionen beträgt in der Regel mindestens 4 Stunden, besonders bevorzugt mindestens 8 Stunden.

Die Trocknung und Aushärtung der Beschichtungen erfolgt im allgemeinen unter normalen Temperaturbedingungen, d.h. ohne Erhitzung der Beschichtung. Die erfindungsgemäßen Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden.

Als Substrate zur Beschichtung kommen beliebige Untergründe in Frage, bevorzugt Holz, Papier, Textil, Leder, Vlies, Kunststoffoberflächen, Glas, Keramik, mineralische Baustoffe, wie Zement-Formsteine und Faserzementplatten, oder Metalle oder beschichtete Metalle, besonders bevorzugt Kunststoffe oder Metalle, die beispielsweise auch als Folien vorliegen können.

Die Beschichtung der Substrate erfolgt nach üblichen, dem Fachmann bekannten Verfahren, wobei man wenigstens ein erfindungsgemäßes dispergierbares Harz in einer Lackformulierung auf das zu beschichtende Substrat in der gewünschten Stärke aufbringt und die flüchtigen Bestandteile der Dispersionen, gegebenenfalls unter Erhitzen, entfernt. Dieser Vorgang kann gewünschtenfalls ein- oder mehrfach wiederholt werden. Die die erfindungsgemäßen Polyisocyanate enthaltenden Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren appliziert werden. Die Beschichtungsstärke liegt in der Regel in einem Bereich von etwa 3 bis 1000 g/m² und vorzugsweise 10 bis 200 g/m².

Die folgenden Beispiele sollen die Eigenschaften der Erfindung erläutern, ohne sie aber einzuschränken.

### Beispiele

### Hochfunktionetie, hoch- oder hyperverzweigte Polyisocyanate:

### Polyisocyanat X1:

In ein Reaktionsgefäß, ausgestattet mit Rührer, Rückflusskühler, Gaseinleitrohr und Tropftrichter wurden 333 g Isophorondiisocyanat (IPDI) unter Stickstoffbedeckung vorgelegt und unter gutem Rühren innerhalb 1 min 100 g Trimethylolpropan (TMP), gelöst in 433 g trockenem Aceton, zugegeben. Nach Zudosierung von 0,1 g Dibutylzinndilaurat wurde die Reaktionsmischung unter Rühren auf 60°C erwärmt und die Abnahme des NCO-Gehaltes gemäß DIN 53185 titrimetrisch verfolgt. Bei Erreichen eines NCO-Gehaltes von 5,4 Gew.% wurden 167 g BASONAT® HA 300, gelöst in 167 g trockenem Aceton zugesetzt und die Mischung noch 30 min bei 60°C gerührt. Das Endprodukt wies einen NCO-Gehalt von 5,8 Gew.% auf.

### Polyisocyanat X2:

In ein Reaktionsgefäß, ausgestattet mit Rührer, Rückflusskühler, Gaseinleitrohr und Tropftrichter wurden 500 g Isophorondiisocyanat (IPDI) unter Stickstoffbedeckung vorgelegt und unter gutem Rühren innerhalb 1 min 150 g Trimethylolpropan (TMP), gelöst in 650 g trockenem Essigsäurethylester, zugegeben. Nach Zudosierung von 0,2 g Dibutylzinn-dilaurat wurde die Reaktionsmischung unter Rühren auf 40°C erwärmt und die Abnahme des NCO-Gehaltes gemäß DIN 53185 titrimetrisch verfolgt. Bei Erreichen eines NCO-Gehaltes von 7,2 Gew.% wurden 1250 g BASONAT® HA 300 zugesetzt, die Mischung auf 60°C erwärmt und 1 h bei dieser Temperatur gerührt. Anschliessend wurde Essigsäureethylester bei 60°C und 8 mbar am Rotationsverdampfer entfernt. Das Endprodukt wies einen NCO-Gehalt von 14,6 Gew.% auf.

### Polyisocyanat X3:

In ein Reaktionsgefäß, ausgestattet mit Rührer, Rückflusskühler, Gaseinleitrohr und Tropftrichter wurden 500 g Isophorondiisocyanat (IPDI) unter Stickstoffbedeckung vorgelegt und unter gutem Rühren innerhalb 1 min 150 g Trimethylolpropan (TMP), gelöst in 650 g trockenem Essigsäurethylester, zugegeben. Nach Zudosierung von 0,2 g Dibutylzinn-dilaurat wurde die Reaktionsmischung unter Rühren auf 40°C erwärmt und die Abnahme des NCO-Gehaltes gemäß DIN 53185 titrimetrisch verfolgt. Bei Erreichen eines NCO-Gehaltes von 7,2 Gew.% wurden 1075 g BASONAT® HI 100 zugesetzt, die Mischung auf 60°C erwärmt und 1 h bei dieser Temperatur gerührt. Anschliessend wurde Essigsäureethylester bei 60°C und 8 mbar am Rotationsverdampfer entfernt. Das Endprodukt wies einen NCO-Gehalt von 16,2 Gew.% auf.

BASONAT^{®} HA 300, BASF AG: HDI-Polyisocyanat mit hohem Gehalt an Allophanatgruppen, Viskosität ca. 350 mPas, Festgehalt = 100 %, NCO-Gehalt = 19,5 Gew.%. BASONAT^{®} HI 100, BASF AG: HDI-Polyisocyanat mit hohem Gehalt an Isocyanuratgruppen, Viskosität bei 23 °C (DIN EN ISO 3219) = 2500-4000 mPas, Festgehalt = 100 %, NCO-Gehalt (DIN EN ISO 11909) = 21,5-22,5 %.

### Polyetherole

Y1 = Auf Methanol gestartetes und unter Kaliumhydroxid-Katalyse hergestelltes, monofunktionelles Polyethylenoxid mit einer mittleren OH Zahl von 53 mg KOH/g, gemessen nach DIN 53 240, entsprechend einem mittleren Molekulargewicht von ca. 1000 g/mol. Die noch anwesenden basischen Katalysatorreste wurden anschließend mit Essigsäure neutralisiert und das Produkt entsalzt.

Y2 = Auf Methanol gestartetes und unter Kaliumhydroxid-Katalyse hergestelltes, monofunktionelles Polyethylenoxid mit einer mittleren OH Zahl von 29 mg KOH/g, gemessen nach DIN 53 240, entsprechend einem mittleren Molekulargewicht von ca. 2000 g/mol. Die noch anwesenden basischen Katalysatorreste wurden anschließend mit Essigsäure neutralisiert und das Produkt entsalzt.

Y3 = Auf Methanol gestartetes und unter Kaliumhydroxid Katalyse hergestelltes, monofunktionelles Polyethylenoxid mit einer OH Zahl von 112 mg KOH/g, gemessen nach DIN 53 240, entsprechend einem mittleren Molekulargewicht von ca. 500 g/mol. Die noch anwesenden basischen Katalysatorreste wurden anschließend mit Essigsäure neutralisiert. Die Basizität wird durch Titration mit HCl zu 10,6 mmol/ kg bestimmt. Auf 75 g des Polyethers wurden dann ca. 0,12 g wasserfreie p-Toluolsulfonsäure zugegeben und damit die Basizität auf 2 mmol/kg (HCl Titration) eingestellt Polyisocyanate
Z1 = Isomerengemisch aus 80% 2,4- und 20% 2,6-Toluylendiisocyanat
Z2 = Basonat® HI 100 der BASF AG (siehe oben)
Z3 = Kommerzielles emulgatormodifiziertes Polyisocyanat auf Basis von isocyanuratisiertem Hexamethylendiisocyanat, NCO-Gehalt ∼17 +/- 0,5 % (Basonat® HW 100 der BASF AG).
Z4 = Kommerzielles emulgatormodifiziertes Polyisocyanat auf Basis von isocyanuratisiertem Hexamethylendiisocyanat, 80 % in Solvenon® PC; NCO-Gehalt ∼13,5 +/-0,5 % (Basonat® HW 180 der BASF AG).
Z5 = Kommerzielles niederviskoses Polyisocyanat auf Basis von isocyanuratisiertem Hexamethylendiisocyanat, NCO-Gehalt - 23 +/- 1,0 % (Tolonate® HDT LV2 der Rhodia)

### Beispiel 1

Zu 250 g hyperverzeigtem Polyisocyanat X1 wurden 40 g des Polyetherols Y2 bei Raumtemperatur gegeben. Unter Rühren wurde die Reaktionslösung für 3 Stunden bei 50 bis 60 °C umgesetzt. Nach Entnahme einer kleinen Probe zeigte sich, dass diese nach Dispergierung in Wasser noch leicht absetzte; es wurden deshalb weitere 10 g des Polyetherols Y2 in 150 g Aceton zugegeben. Nach weiteren 2 Stunden zeigte sich nach Probenentnahme, dass das Produkt eine feinteilige Emulsion in Wasser bildete, die sich nicht mehr absetzte.

Nach Entfernen des Acetons, wurde ein leicht gelbliches Harz erhalten, welches eine Viskosität von 12.000 mPas (23 °C) und einen NCO Wert von 2,95 % aufweist.

Aus dem Harz wurde eine 67 % ige Lösung in Propylencarbonat hergestellt um dieses in Lackformulierungen einzusetzten.

### Beispiel 2

Vorprodukt - Zu 53 g Polyisocyanat Z1 wurden 320 g des Polyetherols Y3 gegeben, 1 bis 2 Stunden bei 75 bis 80 °C unter Stickstoff gerührt und dann auf Raumtemperatur abgekühlt. Anhand einer Probe zeigte sich, dass im IR keine NCO Bande mehr vorhanden war.

Zu einer Mischung aus 400 g des Polyisocyanats Z2 und 100 g des hyperverzweigten Polyisocyanates X2 wurden 88g des Vorproduktes gegeben. Nach vierstündigem Rühren bei 50 bis 70 °C wurde eine kleine Probe entnommen, die sich leicht in Wasser dispergieren ließ.

Es wurde ein fast farbloses Harz als Produkt erhalten, welches eine Viskosität von 7.590 mPas (23 °C) und einen NCO Wert von 16,5 % aufweist.

Beispiel 2A: in Analogie zu Beispiel 2 wurde ein entsprechendes Produkt mit dem NCO-Gehalt von 16,1 % und einer Viskosität von 9.710 mPa*s hergestellt.

### Beispiel 3

### Vorprodukt - wie bei Beispiel 2

Zu einer Mischung aus 400 g des Polyisocyanats Z2 und 100 g des hyperverzweigten Polyisocyanates X3 wurde 88 g des Vorproduktes aus Beispiel 2 gegeben. Nach fünfstündigem Rühren bei 50 bis 60 °C wurde eine kleine Probe entnommen, die sich leicht in Wasser dispergieren ließ.

Es wurde ein leicht gelbliches Harz als Produkt erhalten, welches eine Viskosität von 8.890 mPas (23 °C) und einen NCO Wert von 16,5 % aufweist.

### Beispiel 3A: in Analogie zu Beispiel 3 wurde ein entsprechendes Produkt mit dem NCO-Gehalt von 16,4 % und einer Viskosität von 11.400 mPa*s hergestellt.

### Beispiel 4

Zu einer Mischung aus 400 g des Polyisocyanats Z2 und 100 g des hyperverzweigten Polyisocyanates X2 wurde 56 g des Polyetherols Y1 gegeben. Nach vierstündigem Rühren bei 70 bis 80°C wurde eine kleine Probe entnommen, die sich leicht in Wasser dispergieren ließ.

Das Produkt wurde nach Abkühlen fest, der NCO-Wert wurde zu 17,4 % bestimmt.

### Anwendungstechnische Untersuchungen an Lacken:

Die erfindungsgemäßen Polyisocyanate sowie Vergleichs-Polyisocyanate (Härter) wurden exemplarisch mit einer wässrigen hydroxy-funktionellen Komponente gemischt:

### Hydroxyfunktionelle Komponente1 (Polyesterpolyol-basiert):

### 1. Stufe:

| | |
|---|---|
| 328 g | Plusaqua® V 608 (ca. 80%-ig) OH-funktionelles Polyesterharz, Omya AG |
| 18 g | AMP 90 [2-Amino-2-methyl-1-propanol, 90 % in Wasser, Angus-Chemie] Amin zur Neutralisation |
| 454 g | vollentsalztes Wasser |

ergibt:

| | |
|---|---|
| 800 g | hydroxyfunktionelle Mischung (ca. 33 %-ig) |

### 2. Stufe:

| | |
|---|---|
| 240 g | Daotan® (VTW) 1225 (ca. 40 %-ig) Hydroxy-funktionalisierte, Polyester-modifizierte Polyurethandispersion, Fa. Vianova Resins |
| 290 g | hydroxyfunktionelle Mischung (ca. 33 %-ig, aus Stufe 1) |
| 3 g | AMP 90 (pH 8,6) |
| 107 g | vollentsalztes Wasser |
| 16 g | Fluorad® FC 430 (10 %-ig) Entschäumer, Fa. 3M |

ergibt:

| | |
|---|---|
| 656 g | Hydroxyfunktionelle Komponente (ca. 29,3 %-ig) |

Die hydroxyfunktionelle Komponente 1 wurde entsprechend folgender Verhältnisse mit den Polyisocyanat-Komponenten gemischt. Der Ansatz aus Beispiel 4 wurde dafür im Verhältnis 80:20 mit 1,2-Propylencarbonat verdünnt.

| | Beispiel 5 Referenz | Beispiel 6 Referenz | Beispiel 7 | Beispiel 8 | Beispiel 9 |
|---|---|---|---|---|---|
| Hydroxyfunktionelle Komponente 1, 29,3 %-ig | 77,3 g | 73,9 g | 67,3 g | 65,1 g | 68,4 g |
| Polyisocyanat Z3 | 22,7 g | | | | |
| Polyisocyanat Z4 | | 27,1 g | | | |
| Beispiel 2, 100 % | | | 19,7 g | | |
| Beispiel 4, 80 %-ig; 20 % Propylencarbonat | | | | 23,8 g | |
| Beispiel 3, 100 %-ig | | | | | 20,0 g |
| vollentsalztes Wasser | | | 13,0 g | 11,0 g | 11,6 g |
| pH Wert sofort | | | 8,0 | 8,1 | 8,0 |
| pH-Wert nach 24 h | | | 6,7 | 6,8 | 6,6 |

Mit einem Filmziehrahmen wurden Gradientenofenbleche beschichtet (180 µm nass). Die so erhaltenen Klarlacke wurden 30 Minuten bei 60-120 °C in einem Umluftofen gehärtet, und dann unter Normbedingungen 23°C/50 % Luftfeuchte abkühlen lassen. Sie ergaben Schichtdicken von ∼40 µm trocken.

| Schichtdicke nach 30 Minuten | Beispiel 5 Referenz | Beispiel 6 Referenz | Beispiel 7 | Beispiel 8 | Beispiel 9 |
|---|---|---|---|---|---|
| 60 °C | ∼40 | ~40 | 37 | 34 | 39 |
| 70 °C | ∼40 | ~40 | 37 | 32 | 39 |
| 80 °C | ∼40 | ~40 | 38 | 35 | 40 |
| 90 °C | ∼40 | ~40 | 42 | 37 | 41 |
| 100 °C | ∼40 | ~40 | 38 | 36 | 40 |
| 110 °C | ∼40 | ~40 | 38 | 35 | 40 |
| 120 °C | ∼40 | ~40 | 35 | 35 | 40 |

Die mit den erfindungsgemäßen Polyisocyanaten hergestellten Lacke wiesen gegenüber den Standardisocyanaten (Referenzbeispiele 5 und 6) höhere (bessere) Härte auf. Gegenüber Referenzbeispiel 6 wurde zudem noch eine geringere Sprödigkeit gefunden (Gitterschnitt).

Die Härte wurde als Pendelhärte nach König bestimmt (EN ISO 1522; Pendelschläge). Je höher die Härte desto besser.

Der Gitterschnitt-Wert wurde gemäß DIN 53151 bestimmt (0 = sehr gut; 5 = sehr spröde).

### Pendelhärten:

| T/°C | Beispiel 5 Referenz | Beispiel 6 Referenz | Beispiel 7 | Beispiel 8 | Beispiel 9 |
|---|---|---|---|---|---|
| 60 | 31 | 25 | 40 | 37 | 31 |
| 70 | 44 | 40 | 53 | 56 | 56 |
| 80 | 48 | 61 | 67 | 72 | 71 |
| 90 | 49 | 80 | 73 | 88 | 85 |
| 100 | 51 | 90 | 87 | 96 | 91 |
| 110 | 52 | 91 | 92 | 101 | 95 |
| 120 | 77 | 93 | 95 | 104 | 101 |

### Gitterschnitt:

| T/°C | Beispiel 5 Referenz | Beispiel 6 Referenz | Beispiel 7 | Beispiel 8 | Beispiel 9 |
|---|---|---|---|---|---|
| 60 | 2,5 | 5 | 5 | 3 | 3 |
| 70 | 2 | 5 | 2,5 | 3 | 3 |
| 80 | 0 | 5 | 2,5 | 2,5 | 3 |
| 90 | 0 | 5 | 1 | 2 | 3,5 |
| 100 | 1 | 5 | 1 | 1,5 | 1,5 |
| 110 | 0,5 | 5 | 1 | 1,5 | 1,5 |
| 120 | 0 | 4,5 | 1 | 1,5 | 3 |

Zusätzlich wurde die Elastizität aller Filme als Erichsen-Tiefung bestimmt (Tiefungsprüfung DIN EN ISO 1520). Alle Lackfilme ergaben dabei Werte größer 9. Diese Filme sind also im Rahmen dieses Testes als sehr elastisch zu bezeichnen.

Zusätzlich wurde der sogenannte Acetontest als Maß für die Lösungsmittelbeständigkeit bestimmt. Alle Filme ergaben dabei mindestens 100 Doppelhübe.

### Hydroxyfunktionelle Komponente 2 (Acrylatemulsion-basiert):

| | |
|---|---|
| 858,1 g | Macrynal® VSM 6299w / 42 WA (ca. 42 %-ig) OH-funktionelle Acrylate-mulsion, Surface Specialties (UCB) |
| 17,9 g | Surfynol® 104 (ca. 50 %-ig in Butylglykol) Netz-/Dispergier- und Anti-schaummittel, Air Products |
| 3,3 g | Borchi® Gel LW 44 (1:1 in Wasser) Verdickungsmittel, Borchers 15 min bei 1800 U.p.m. weiterrühren |
| 3,3 g | Additol® XW 390, Verlaufs-/ Benetzungsmittel, Surface Specialties (UCB) |
| 14,7 g | Borchi® Gol LAC80 (ca. 10 %ig in Butoxyl) Glättungsmittel, Borchers 5 min bei 800 U.p.m weiterrühren |
| 102,7 g | destilliertes Wasser 24 h entgasen lassen |
| ergibt | |
| 1000 g | Hydroxyfunktionelle Komponente 2 (ca. 36 %-ig) |

### Polyisocyanat-Komponente zur Reaktion mit der Hydroxyfunktionellen Komponente 2

| | Beispiel 10 Referenz | Beispiel 11 | Beispiel 12 |
|---|---|---|---|
| Z3 | 49,7 g | | |
| Beispiel 3A | | 77,6 g | |
| Beispiel 2A | | | 50,1 |
| Z5 | 35,3 g | 53,0 g | 35,3 |
| Butoxyl | 21,3 g | 34,5 | 22,5 |
| Isocyanat-Komponente | 106,3 g | 165,1 | 107,9 |

### Über Nacht stehen lassen.

Die hydroxyfunktionelle Komponente 2 wurde entsprechend folgender Verhältnisse mit den Polyisocyanat-Komponenten gemischt.

| | Beispiel 10 Referenz | Beispiel 11 | Beispiel 12 |
|---|---|---|---|
| Hydroxyfunktionelle | 93,2 g | 74,9 g | 93,2 |
| Komponente 2, 36 %-ig | | | |
| Isocyanat-Komponente | 36,0 g | 31,6 | 38,6 |
| Destilliertes Wasser | 21,6 g | 23,5 | 31,2 |

In Analogie zu den Beispielen 5-9 wurden Schichtdicken um die 40 Mikrometer erhalten.

### In den Pendelhärten schnitt Beispiel 11 besser ab als die Referenz.:

| T /°C | Beispiel 10 Referenz | Beispiel 11 |
|---|---|---|
| 60,0 | 105 | 118,0 |
| 70,0 | 120 | 124,0 |
| 80,0 | 125 | 129,0 |
| 90,0 | 131 | 132,0 |
| 100,0 | 134 | 138,0 |
| 110,0 | 133 | 143,0 |
| 120,0 | 139 | 137,0 |

### Im Gitterschnitt ist Beispiel 12 besser als die Referenz:

| T/°C | Beispiel 10 Referenz | Beispiel 12 |
|---|---|---|
| 60 | 0,5 | 0 |
| 70 | 0 | 0 |
| 80 | 0,5 | 0 |
| 90 | 0,5 | 0 |
| 100 | 0,5 | 0 |
| 110 | 0,5 | 0 |
| 120 | 0,5 | 0 |
| 130 | 1,5 | 0 |

Zusätzlich wurde die Elastizität aller Filme als Erichsen-Tiefung bestimmt (Tiefungsprüfung DIN EN ISO 1520). Alle Lackfilme ergaben dabei Werte größer 9 (Bei der Referenz bei einer Temperatur 8,5). Diese Filme sind also im Rahmen dieses Testes als sehr elastisch zu bezeichnen.

Zusätzlich wurde der sogenannte Acetontest als Maß für die Lösungsmittelbeständigkeit bestimmt. Alle Filme ergaben dabei mindestens 100 Doppelhübe.

Zusätzlich wurde die Säurebeständigkeit gegenüber Schwefelsäure und die Kratzfestigkeit bestimmt.

Etchtest mit Schwefelsäure: Mit einer Pipette werden 25 µl-Tropfen auf ein Gradientenofenblech mit einem 30 min bei 80 oder 130 °C gehärtetem Lackfilm gegeben und dieses im Gradientenofen 30 Minuten bei 30-75 °C geheizt. Das Blech wird mit Wasser abgewaschen und getrocknet. Angegeben wird die niedrigste Temperatur bei der nach 24 h bei Raumtemperatur mit dem Auge noch eine Anätzung festzustellen ist.

Scheuertest, Kratzfestigkeit im Scotch-Brite-Test: Ein 500 g Schlosserhammer wird am Kopf mit doppelseitigem Klebeband und darauf Faservlies (Scotchbrite, 7448 Typ S ultrafine) beklebt. Der Hammer wird mit zwei Fingern am Stielende gepackt und mit gleichmäßigen Doppelhüben ohne Verkanten, ohne zusätzliche Druckaufbringung auf einer Linie über den Lackfilm (gehärtet bei 80 oder 130 °C) vor- und zurückbewegt. Nach 50 Doppelhüben und nach zusätzlich 30 Minuten Temperung im Umluftofen bei 60 °C und Abkühlen auf Raumtemperatur wird der Glanz quer zur Scheuer-Richtung bestimmt. Das Vlies wird nach 50 Doppelhüben gewechselt. Glanzmessung: Glanzmessgerät Mikro TRI-Gloss bei 60° Einfallwinkel.

| | Beispiel 10 Referenz | Beispiel 11 | Beispiel 12 |
|---|---|---|---|
| Säurebeständigkeit (80 °C), T/°C | 38 | 39 | 38 |
| Säurebeständigkeit (130 °C), T/°C | 39 | 41 | 42 |
| Kratzbeständigkeit (80 °C), Glanz/% | 17 | 22 | 51 |
| Kratzbeständigkeit (130 °C), Glanz/% | 68 | 66 | 73 |

Bei 80 °C sind die Säurebeständigkeiten in etwa gleich gut, während die Kratzbeständigkeiten der erfindungsgemäßen Produkte besser sind als die Referenz.

Bei 130 °C sind die Säurebeständigkeiten der erfindungsgemäßen Produkte leicht besser und die Kratzbeständigkeiten mit der Referenz vergleichbar.

## Patentansprüche

1. Verfahren zur Herstellung von wasserdispergierbaren, hochfunktionellen, hoch- oder hyperverzweigten Polyisocyanaten, umfassend die Reaktionsschritte
(i) Herstellen eines Additionsproduktes (A), das eine oder mehrere Isocyanatgruppen enthält und mindestens eine mit Isocyanat reaktive Gruppe enthält, durch Umsetzen eines
(I) (a1) Di- und/oder
(I) (a2) Polyisocyanats
mit
(b1) mindestens einer Verbindung mit mindestens drei mit Isocyanat reaktiven Gruppen und/oder
(b2) mindestens einer Verbindung mit zwei mit Isocyanat reaktiven Gruppen,
wobei mindestens eine der Komponenten (a) oder (b) funktionelle Gruppen mit gegenüber den funktionellen Gruppen der anderen Komponente unterschiedlicher Reaktivität aufweist und
wobei das Umsetzungsverhältnis so gewählt wird, dass im Mittel das Additionsprodukt (A) mindestens eine mit Isocyanat reaktive Gruppe und eine oder mehrere Isocyanatgruppen enthält,
(ii) gegebenenfalls intermolekulare Additionsreaktion des Additionsprodukts (A) aus (i) zu einem Polyadditionsprodukt (P), das eine oder mehrere Isocyanatgruppen enthält und mindestens eine mit Isocyanat reaktive Gruppe enthalten kann,
(iii) gegebenenfalls Umsetzen des Additionsproduktes (A) aus (i) und/oder des Polyadditionsprodukts (P) aus (ii), soweit dieses mindestens eine mit Isocyanat reaktive Gruppe enthält, mit einem monofunktionellen Isocyanat, und/oder
(iv) gegebenenfalls Umsetzen des Additionsproduktes (A) aus (i) und/oder des Polyadditionsprodukts (P) aus (ii), soweit dieses mindestens eine mit Isocyanat reaktive Gruppe enthält, mit mindestens einem Di- oder Polyisocyanat (I)(a1) oder (I)(a2) und/oder mindestens einem Di- oder Polyisocyanat (II), das vom Di- oder Polyisocyanat (I) verschieden ist, und
(v) Umsetzen des Additionsproduktes (A) aus (i) und/oder des Polyadditionsprodukts (P) aus (ii) und/oder des Reaktionsproduktes aus (iii) und/oder (iv) mit einem monofunktionellen Polyalkylenoxidpolyetheralkohol.

2. Verfahren gemäß Anspruch 1, **dadurch gekennzeichnet, daß** das aus Schritt (v) erhaltene Polyisocyanat mindestens drei freie Isocyanatgruppen aufweist.

3. Verfahren gemäß Anspruch 1 oder 2, **dadurch gekennzeichnet, daß** das aus Schritt (v) erhaltene Polyisocyanat nicht mehr als 100 Isocyanatgruppen aufweist.

4. Verfahren gemäß einem der vorstehenden Ansprüche, **dadurch gekennzeichnet, daß** das aus Schritt (v) erhaltene Polyisocyanat im Mittel 0 bis 20 gegenüber Isocyanat reaktive Gruppen aufweist.

5. Verfahren gemäß einem der vorstehenden Ansprüche, **dadurch gekennzeichnet, daß** das aus Schritt (v) erhaltene Polyisocyanat ein Molekulargewicht M_{w} von nicht mehr als 100.000 g/mol aufweist.

6. Verfahren gemäß einem der vorstehenden Ansprüche, **dadurch gekennzeichnet, daß** das aus Schritt (v) erhaltene Polyisocyanat eine Polydispersität von 1,1 bis 50 aufweist.

7. Verfahren gemäß einem der vorstehenden Ansprüche, **dadurch gekennzeichnet, daß** die Di- oder Polyisocyanate (I) ausgewählt sind aus der Gruppe bestehend aus 2,4'- und 4,4'-Diphenylmethandüsocyanat (MDI), die Mischungen aus monomeren Diphenylmethandiisocyanaten und höherkernigen Homologen des Diphenylmethandiisocyanats (Polymer-MDI), Tetramethylendiisocyanat, Tetramethylendiisocyanat-Trimere, Hexamethylendiisocyanat, Hexamethylendiisocyanat-Trimere, Isophorondiisocyanat-Trimer, 2,4'- und 4,4'-Methylenbis(cyclohexyl)-diisocyanat, Xylylendiisocyanat, Tetramethylxylylendiisocyanat, Dodecyldiisocyanat, Lysinalkylester-diisocyanat, wobei Alkyl für C₁ bis C₁₀ steht, 2,2,4- oder 2,4,4-Trimethyl-1,6-hexamethylen-diisocyanat, 1,4-Di-isocyanatocyclohexan, 1,3- oder 1,4-Bis(isocyanatomethyl)cyclohexan, 4-Isocyanato-methyl-1,8-octamethylendiisocyanat, 2,4-Toluylendiisocyanat (2,4-TDI), Triisocyanatotoluol, Isophorondiisocyanat (IPDI), 2-Butyl-2-ethylpentamethylendiisocyanat, 2-Isocyanatopropylcyclohexylisocyanat, 3(4)-Isocyanatomethyl-l-methylcyclohexylisocy-anat, 1,4-Diisocyanato-4-methylpentan, 2,4'-Methylenbis(cyclohexyl)diisocyanat, 4-Methyl-cyclohexan-1,3-diisocyanat (H-TDI), 1,3- und 1,4-Phenylendiisocyanat, 1,5-Naphthylendiisocyanat, Diphenyldiisocyanat, Tolidindiisocyanat und 2,6-Toluylen-diisocyanat oder 3 (bzw. 4), 8 (bzw. 9)-Bis(isocyanatomethyl)-tricyclo[5.2.1.0^{2.6}]decan-Isomerengemische.

8. Verfahren gemäß einem der vorstehenden Anspruche, **dadurch gekennzeichnet, daß** die Verbindungen (b1) mit mindestens drei mit Isocyanat reaktiven Gruppen ausgewählt sind aus der Gruppe umfassend Glycerin, Trimethylolmethan, Trimethylolethan, Trimethylolpropan, 1,2,4-Butantriol, Tris(hydroxymethyl)- aminomethan, Tris(hydroxyethyl)aminomethan, 2-Amino-1,3-propandiol, 2-Amino-2-methyl-1,3-propandiol, Diethanolamin, Dipropanolamin, Diisopropanolamin, Ethanolpropanolamin, Bis(aminoethyl)amin, Bis(aminopropyl)amin, Tris(aminoethyl)amin, Tris(aminopropyl)amin, Trisaminononan, Tris-(2-hydroxyethyl) isocyanurat, Pentaerythrit, Dipentaerythrit, Bis(trimethylolpropan), Sorbit, Mannit, Diglycerol, Threit, Erythrit, Adonit (Ribit), Arabit (Lyxit), Xylit, Dulcit (Galactit), Maltit, Isomaltit, Glucose, tri- oder höherfunktionelle Polyetherole auf Basis von tri- oder höherfunktionellen Startermolekülen und Ethylenoxid und/oder Propylenoxid und/oder Butylenoxid, oder deren aminogruppenterminierte Derivate, und tri- oder höherfunktionellen Polyesterolen.

9. Verfahren gemäß einem der vorstehenden Ansprüche, **dadurch gekennzeichnet, daß** die Verbindungen (b2) mit zwei gegenüber Isocyanat reaktiven Gruppen ausgewählt sind aus der Gruppe umfassend Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, 1,6-Hexandiol, Hydroxypivalinsäureneopentylglykolester, Propan-1,2-dithiol, Butan-1,2-dithiol, Mercaptoethanol, Mercaptopropanol, Mercaptobutanol, Ethylendiamin, Toluylendiamin, Isophorondiamin, Cysteamin, Ethanolamin, N-Methylethanolamin, 1,2- und 1,3-Propanolamin, Isopropanolamin, 2-(Butylamino)-ethanol, 2-(Cyclohexylamino)ethanol, 2-Amino-1-butanol, 2-(2'-Aminoethoxy)-ethanol und höhere Alkoxylierungsprodukte des Ammoniaks, 4-Hydroxypiperidin, 1-Hydroxyethylpiperazin, Aminopropanthiol und difunktionelle Polyether- oder Polyesterole, sowie difunktionelle Polyetheramine.

10. Verfahren gemäß einem der vorstehenden Ansprüche, **dadurch gekennzeichnet, daß** es sich bei den monofunktionellen Polyalkylenoxidpolyetheralkoholen um solche handelt, die erhältlich sind durch Alkoxylierung von Thiolverbindungen oder Monohydroxyverbindungen der allgemeinen Formel
R⁵-O-H
oder sekundäre Monoamine der allgemeinen Formel
R⁸R⁷N-H,
in welchen R⁵, R⁶ und R⁷ unabhängig voneinander jeweils C₁-C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂-C₁₈-Alkyl, C₆-C₁₂-Aryl, C₅-C₁₂-Cycloalkyl oder einen fünf- bis sechsgliedrigen, Sauerstoff- , Stickstoff- und/oder Schwefelatome aufweisenden Heterocyclus bedeuten oder R⁶ und R⁷ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können, mit Ethylenoxid, Propylenoxid, iso-Butylenoxid, Vinyloxiran und/oder Styroloxid.

11. Verfahren gemäß Anspruch 10, **dadurch gekennzeichnet, daß** die einwertigen Polyalkylenoxidpolyetheralkohole im statistischen Mittel mindestens 2 Alkylenoxideinheiten aufweisen.

12. Verfahren gemäß Anspruch 10 oder 11, **dadurch gekennzeichnet, daß** die einwertigen Polyalkylenoxidpolyetheralkohole im statistischen Mittel bis zu 50 Alkylenoxideinheiten aufweisen.

13. Wasserdispergierbares, hochfunktionelles, hoch- oder hyperverzweigtes Polyisocyanat, erhältlich nach einem der vorstehenden Ansprüche.

14. Verwendung eines wasserdispergierbaren, hochfunktionellen, hoch- oder hyperverzweigten Polyisocyanats gemäß Anspruch 13 in einer Polyurethandispersion.

15. Polyurethandispersion, enthaltend mindestens ein wasserdispergierbares, hochfunktionelles, hoch- oder hyperverzweigtes Polyisocyanat gemäß Anspruch 13 sowie gegebenenfalls weitere Polyisocyanaten mit einer Viskosität bis zu 1200 mPas.

16. Beschichtungsmittel, enthaltend ein wassermulgierbares, hochfunktionelles, hoch- oder hyperverzweigtes Polyisocyanat gemäß Anspruch 13.

17. Verwendung der wasserdispergierbaren hochfunktionellen, hoch- oder hyperverzweigten Polyisocyanate gemäß Anspruch 13 als Bausteine zur Herstellung von Lacken, Überzügen, coil coatings, Klebstoffen, Dichtmassen, Gießelastomeren oder Schaumstoffen und Polyadditionsprodukte sowie zur Imprägnierung von Leder oder Textil.

18. Verwendung der Beschichtungsmittel gemäß Anspruch 16 als Grundierungen, Füller, pigmentierte Decklacke und Klarlacke im Bereich Industrie-, insbesondere Flugzeug- oder Großfahrzeuglackierung, Holz-, Auto-, insbesondere OEM- oder Auforeparaturlackierung, oder Dekolackierung.

## Claims

1. A process for preparing water-dispersible, high-functionality, highly branched or hyperbranched polyisocyanates, which comprises the reaction steps
(i) preparation of an addition product (A) comprising one or more isocyanate groups and at least one group which is reactive toward isocyanate groups by reacting a
(I) (a1) diisocyanate and/or
(I) (a2) polyisocyanate
with
(b1) at least one compound having at least three groups which are reactive toward isocyanate groups and/or
(b2) at least one compound having two groups which are reactive toward isocyanate groups,
where at least one of the components (a) or (b) has functional groups which have differing reactivities toward the functional groups of the other component and
the reaction ratio is selected so that the addition product (A) comprises on average at least one group which is reactive toward isocyanate groups and one or more isocyanate groups,
(ii) optionally, intermolecular addition reaction of the addition product (A) from (i) to form a polyaddition product (P) which comprises one or more isocyanate groups and can comprise at least one group which is reactive toward isocyanate groups,
(iii) optionally, reaction of the addition product (A) from (i) and/or the polyaddition product (P) from (ii) if this comprises at least one group which is reactive toward isocyanate groups with a monofunctional isocyanate, and/or
(iv) optionally, reaction of the addition product (A) from (i) and/or the polyaddition product (P) from (ii) if this comprises at least one group which is reactive toward isocyanate groups with at least one diisocyanate or polyisocyanate (I)(a1) or (I)(a2) and/or at least one diisocyanate or polyisocyanate (II) which is different from the diisocyanate or polyisocyanate (I), and
(v) reaction of the addition product (A) from (i) and/or the polyaddition product (P) from (ii) and/or the reaction product from (iii) and/or (iv) with a monofunctional polyalkylene oxide polyether alcohol.

2. The process according to claim 1, wherein the polyisocyanate obtained from step (v) has at least three free isocyanate groups.

3. The process according to claim 1 or 2, wherein the polyisocyanate obtained from step (v) has not more than 100 isocyanate groups.

4. The process according to any of the preceding claims, wherein the polyisocyanate obtained from step (v) has on average from 0 to 20 groups which are reactive toward isocyanate groups.

5. The process according to any of the preceding claims, wherein the polyisocyanate obtained from step (v) has a molecular weight M_{w} of not more than 100 000 g/mol.

6. The process according to any of the preceding claims, wherein the polyisocyanate obtained from step (v) has a polydispersity of from 1.1 to 50.

7. The process according to any of the preceding claims, wherein the diisocyanates or polyisocyanates (I) are selected from the group consisting of diphenylmethane 2,4'- and 4,4'-diisocyanate (MDI), mixtures of monomeric diphenylmethane diisocyanates and higher homologues of diphenylmethane diisocyanate (polymeric MDI), tetramethylene diisocyanate, tetramethylene diisocyanate trimers, hexamethylene diisocyanate, hexamethylene diisocyanate trimers, isophorone diisocyanate trimer, 2,4'- and 4,4'-methylenebis(cyclohexyl isocyanate), xylylene diisocyanate, tetramethylxylylene diisocyanate, dodecyl diisocyanate, lysine alkyl ester diisocyanate, where alkyl is C₁-C₁₀-alkyl, 2,2,4- or 2,4,4-trimethyl-1,6-hexamethylene diisocyanate, 1,4-diisocyanatocyclohexane, 1,3- or 1,4-bis(isocyanatomethyl)cyclohexane, 4-isocyanatomethyl-1,8-octamethylene diisocyanate, tolylene 2,4-diisocyanate (2,4-TDI), triisocyanatotoluene, isophorone diisocyanate (IPDI), 2-butyl-2-ethylpentamethylene diisocyanate, 2-isocyanatopropylcyclohexyl isocyanate, 3(4)-isocyanatomethyl-1-methylcyclohexyl isocyanate, 1,4-diisocyanato-4-methylpentane, 2,4'-methylenebis(cyclohexyl isocyanate), 4-methylcyclohexane 1,3-diisocyanate (H-TDI), 1,3-and 1,4-phenylene diisocyanate, 1,5-naphthylene diisocyanate, biphenyl diisocyanate, tolidine diisocyanate and tolylene 2,6-diisocyanate or 3 (or 4), 8 (or 9)-bis(isocyanatomethyl)tricyclo[5.2.1.0^{2.6}]decane isomer mixtures.

8. The process according to any of the preceding claims, wherein the compounds (b1) having at least three groups which are reactive toward isocyanate groups are selected from the group comprising glycerol, trimethylolmethane, trimethylolethane, trimethylolpropane, 1,2,4-butanetriol, tris(hydroxymethyl)aminomethane, tris(hydroxyethyl)aminomethane, 2-amino-1,3-propanediol, 2-amino-2-methyl-1,3-propanediol, diethanolamine, dipropanolamine, diisopropanolamine, ethanolpropanolamine, bis(aminoethyl)amine, bis(aminopropyl)amine, tris(aminoethyl)amine, tris(aminopropyl)amine, trisaminononane, tris-(2-hydroxyethyl) isocyanurate, pentaerythritol, dipentaerythritol, bis(trimethylolpropane), sorbitol, mannitol, diglycerol, threitol, erythritol, adonitol (ribitol), arabitol (lyxitol), xylitol, dulcitol (galactitol), maltitol, isomaltitol, glucose, trifunctional or higher-functional polyetherols based on trifunctional or higher-functional starter molecules and ethylene oxide and/or propylene oxide and/or butylene oxide, and their amino-terminated derivatives, and trifunctional or higher-functional polyesterols.

9. The process according to any of the preceding claims, wherein the compounds (b2) having two groups which are reactive toward isocyanate groups are selected from the group comprising ethylene glycol, diethylene glycol, triethylene glycol, 1,2-and 1,3-propanediol, dipropylene glycol, tripropylene glycol, neopentyl glycol, 1,2-, 1,3-and 1,4-butanediol, 1,2-, 1,3- and 1,5-pentanediol, 1,6-hexanediol, neopentyl glycol hydroxypivalate, propane-1,2-dithiol, butane-1,2-dithiol, mercaptoethanol, mercaptopropanol, mercaptobutanol, ethylenediamine, toluenediamine, isophoronediamine, cysteamine, ethanolamine, N-methylethanolamine, 1,2- and 1,3-propanolamine, isopropanolamine, 2-(butylamino)ethanol, 2-(cyclohexylamino)ethanol, 2-amino-1-butanol, 2-(2'-aminoethoxy)ethanol and higher alkoxylation products of ammonia, 4-hydroxypiperidine, 1-hydroxyethylpiperazine, aminopropanethiol and bifunctional polyetherols and polyesterols and also bifunctional polyetheramines.

10. The process according to any of the preceding claims, wherein the monofunctional polyalkylene oxide polyether alcohols are ones which are obtainable by alkoxylation of thiol compounds or monohydroxy compounds of the general formula
R⁵-O-H
or secondary monoamines of the general formula
R⁶R⁷N-H,
where R⁵, R⁶ and R⁷ are each, independently of one another, C₁-C₁₈-alkyl, C₂-C₁₈-alkyl which may optionally be interrupted by one or more oxygen and/or sulfur atoms and/or one or more substituted or unsubstituted imino groups, C₆-C₁₂-aryl, C₅-C₁₂-cycloalkyl or a five- or six-membered, oxygen-, nitrogen- and/or sulfur-containing heterocycle or R⁶ and R⁷ together form an unsaturated, saturated or aromatic ring which may optionally be interrupted by one or more oxygen and/or sulfur atoms and/or one or more substituted or unsubstituted imino groups, where the radicals mentioned may each be substituted by functional groups, aryl, alkyl, aryloxy, alkyloxy, halogen, heteroatoms and/or heterocycles, by means of ethylene oxide, propylene oxide, isobutylene oxide, vinyloxirane and/or styrene oxide.

11. The process according to claim 10, wherein the monohydric polyalkylene oxide polyether alcohols have on average at least 2 alkylene oxide units.

12. The process according to claim 10 or 11, wherein the monohydric polyalkylene oxide polyether alcohols have on average up to 50 alkylene oxide units.

13. A water-dispersible, high-functionality, highly branched or hyperbranched polyisocyanate obtainable according to any of the preceding claims.

14. The use of a water-dispersible, high-functionality, highly branched or hyperbranched polyisocyanate according to claim 13 in a polyurethane dispersion.

15. A polyurethane dispersion comprising at least one water-dispersible, high-functionality, highly branched or hyperbranched polyisocyanate according to claim 13 and, optionally further polyisocyanates having a viscosity of up to 1200 mPas.

16. A coating composition comprising a water-emulsifiable, high-functionality, highly branched or hyperbranched polyisocyanate according to claim 13.

17. The use of water-dispersible, high-functionality, highly branched or hyperbranched polyisocyanates according to claim 13 as building blocks for producing paints and varnishes, coatings, coil coatings, adhesives, sealants, pourable elastomers or foams and polyaddition products and also for impregnating leather or textiles.

18. The use of the coating composition according to claim 16 as primer, filler, pigmented topcoat or clear varnish in industrial surface coating, in particular surface coatings for aircraft or large vehicles, surface coating of wood, motor vehicles, in particular in OEM or automobile repair coating, or decorative surface coating.

## Revendications

1. Procédé pour la préparation de polyisocyanates dispersibles dans l'eau, hautement fonctionnels, hautement ramifiés ou hyperramifiés, comprenant les étapes de réaction
(i) préparation d'un produit d'addition (A), qui contient un ou plusieurs groupes isocyanate et qui contient au moins un groupe réactif avec isocyanate, par transformation
(I) (a1) d'un diisocyanate et/ou
(I) (a2) d'un polyisocyanate
avec
(b1) au moins un composé présentant au moins trois groupes réactifs avec isocyanate et/ou
(b2) au moins un composé présentant deux groupes réactifs avec isocyanate,
où au moins un des composants (a) ou (b) présente des groupes fonctionnels avec une réactivité différente par rapport aux groupes fonctionnels de l'autre composant et
où le rapport de transformation est choisi de manière telle qu'en moyenne, le produit d'addition (A) contient au moins un groupe réactif avec isocyanate et un ou plusieurs groupes isocyanate,
(ii) le cas échéant réaction d'addition intermoléculaire du produit d'addition (A) de (i) en un produit de polyaddition (P), qui contient un ou plusieurs groupes isocyanate et qui peut contenir au moins un groupe réactif avec isocyanate,
(iii) le cas échéant transformation du produit d'addition (A) de (i) et/ou du produit de polyaddition (P) de (ii), pour autant que celui-ci contienne au moins un groupe réactif avec isocyanate, avec un isocyanate monofonctionnel, et/ou
(iv) le cas échéant transformation du produit d'addition (A) de (i) et/ou du produit de polyaddition (P) de (ii), pour autant que celui-ci contienne au moins un groupe réactif avec isocyanate, avec au moins un diisocyanate ou polyisocyanate (I) (a1) ou (I) (a2) et/ou au moins un diisocyanate ou polyisocyanate (II) qui est différent du diisocyanate ou polyisocyanate (I), et
(v) transformation du produit de polyaddition (A) de (i) et/ou du produit de polyaddition (P) de (ii) et/ou du produit de réaction de (iii) et/ou de (iv) avec un poly(oxyde d'alkylène)polyétheralcool monofonctionnel.

2. Procédé selon la revendication 1, **caractérisé en ce que** le polyisocyanate obtenu de l'étape (v) présente au moins trois groupes isocyanate libres.

3. Procédé selon la revendication 1 ou 2, **caractérisé en ce que** le polyisocyanate obtenu de l'étape (v) ne présente pas plus de 100 groupes isocyanate libres.

4. Procédé selon l'une quelconque des revendications précédentes, **caractérisé en ce que** le polyisocyanate obtenu de l'étape (v) présente en moyenne 0 à 20 groupes réactifs par rapport à isocyanate.

5. Procédé selon l'une quelconque des revendications précédentes, **caractérisé en ce que** le polyisocyanate obtenu de l'étape (v) présente un poids moléculaire M_{w} qui n'est pas supérieur à 100 000 g/mole.

6. Procédé selon l'une quelconque des revendications précédentes, **caractérisé en ce que** le polyisocyanate obtenu de l'étape (v) présente une polydispersité de 1,1 à 50.

7. Procédé selon l'une quelconque des revendications précédentes, **caractérisé en ce que** les diisocyanates ou les polyisocyanates (I) sont choisis dans le groupe constitué par le 2,4'-diphénylméthanediisocyanate et le 4,4'-diphénylméthanediisocyanate (MDI), les mélanges de diphénylméthanediisocyanates monomères et d'homologues avec plus de noyaux du diphénylméthanediisocyanate (MDI polymère), le tétraméthylènediisocyanate, les trimères de tétraméthylènediisocyanate, l'hexaméthylènediisocyanate, les trimères d'hexaméthylènediisocyanate, le trimère d'isophoronediisocyanate, le 2,4'-méthylènebis(cyclohexyl)-diisocyanate et le 4,4'-méthylènebis(cyclohexyl)-diisocyanate, le xylylènediisocyanate, le tétraméthylxylylènediisocyanate, le dodécyldiisocyanate, le (ester alkylique de la lysine)diisocyanate, où alkyle représente alkyle en C₁ à C₁₀, le 2,2,4-triméthyl-1,6-hexaméthylènediisocyanate ou 2,4,4-triméthyl-1,6-hexaméthylènediisocyanate, le 1,4-diisocyanatocyclohexane, le 1,3-bis(isocyanatométhyl)cyclohexane ou le 1,4-bis(isocyanatométhyl)cyclohexane, le 4-isocyanatométhyl-1,8-octaméthylènediisocyanate, le 2,4-toluylènediisocyanate (2,4-TDI), le triisocyanatotoluène, l'isophoronediisocyanate (IPDI), le 2-butyl-2-éthylpentaméthylènediisocyanate, le 2-isocyanatopropylcyclohexylisocyanate, le 3(4)-isocyanatométhyl-1-méthylcyclohexylisocyanate, le 1,4-diisocyanato-4-méthylpentane, le 2,4'-méthylènebis(cyclohexyl)diisocyanate, le 4-méthylcyclohexane-1,3-diisocyanate (H-TDI), le 1,3-phénylènediisocyanate et 1,4-phénylènediisocyanate, le 1,5-naphtylènediisocyanate, le diphényldiisocyanate, le tolidinediisocyanate et le 2,6-toluylènediisocyanate ou les mélanges d'isomères de 3(ou, selon le cas, 4), 8(ou, selon le cas, 9)-bis(isocyanatométhyl)-tricyclo[5,2,1,0^{2.6}]décane.

8. Procédé selon l'une quelconque des revendications précédentes, **caractérisé en ce que** les composés (b1) comprenant au moins trois groupes réactifs avec isocyanate sont choisis dans le groupe comprenant le glycérol, le triméthylolméthane, le triméthyloléthane, le triméthylolpropane, le 1,2,4-butanetriol, le tris(hydroxyméthyl)aminométhane, le tris(hydroxyéthyl)aminométhane, le 2-amino-1,3-propanediol, le 2-amino-2-méthyl-1,3-propanediol, la diéthanolamine, la dipropanolamine, la diisopropanolamine, l'éthanolpropanolamine, la bis(aminoéthyl)amine, la bis(aminopropyl)amine, la tris(aminoéthyl)amine, la tris(aminopropyl)amine, le trisaminononane, le tris-(2-hydroxyéthyl)isocyanurate, le pentaérythritol, le dipentaérythritol, le bis(triméthylolpropane), le sorbitol, le mannitol, le diglycérol, le thréitol, l'érythritol, l'adonitol (ribitol), l'arabitol (lyxitol), le xylitol, le dulcitol (galactitol), le maltitol, l'isomaltitol, le glucose, les polyétherols trifonctionnels ou à fonctionnalité supérieure à base de molécules de départ trifonctionnelles ou à fonctionnalité supérieure et d'oxyde d'éthylène et/ou d'oxyde de propylène et/ou d'oxyde de butylène, ou leurs dérivés terminés par des groupes amino et les polyesterols trifonctionnels ou à fonctionnalité supérieure.

9. Procédé selon l'une quelconque des revendications précédentes, **caractérisé en ce que** les composés (b2) présentant deux groupes réactifs par rapport à isocyanate sont choisis dans le groupe comprenant l'éthylèneglycol, le diéthylèneglycol, le triéthylèneglycol, le 1,2-propanediol et le 1,3-propanediol, le dipropylèneglycol, le tripropylèneglycol, le néopentylglycol, le 1,2-butanediol, le 1,3-butanediol et le 1,4-butanediol, le 1,2-pentanediol, le 1,3-pentanediol et le 1,5-pentanediol, le 1,6-hexanediol, l'ester néopentylglycolique de l'acide hydroxypivalique, le propane-1,2-dithiol, le butane-1,2-dithiol, le mercaptoéthanol, le mercaptopropanol, le mercaptobutanol, l'éthylènediamine, la toluylènediamine, l'isophoronediamine, la cystéamine, l'éthanolamine, la N-méthyléthanolamine, la 1,2-propanolamine et la 1,3-propanolamine, l'isopropanolamine, le 2-(butylamino)-éthanol, le 2-(cyclohexylamino)éthanol, le 2-amino-1-butanol, le 2-(2`-aminoéthoxy)-éthanol et les produits d'alcoxylation supérieurs de l'ammoniac, la 4-hydroxypipéridine, la 1-hydroxyéthylpipérazine, l'aminopropanethiol et les polyétherols ou polyesterols difonctionnels ainsi que les polyétheramines difonctionnelles.

10. Procédé selon l'une quelconque des revendications précédentes, **caractérisé en ce qu'**il s'agit, pour les poly(oxyde d'alkylène)polyétheralcools monofonctionnels de ceux qui peuvent être obtenus par alcoylation de composés thiol ou de composés monohydroxy de formule générale
R⁵-O-H
ou de monoamines secondaires de formule générale
R⁶R⁷N-H,
où R⁵, R⁶ et R⁷ signifient, indépendamment les uns des autres, à chaque fois alkyle en C₁-C₁₈; alkyle en C₂-C₁₈, aryle en C₆-C₁₂, cycloalkyle en C₅-C₁₂ le cas échéant interrompu par un ou plusieurs atomes d'oxygène et/ou de soufre et/ou par un ou plusieurs groupes imino substitués ou non substitués ou un hétérocycle de cinq à six chaînons, présentant des atomes d'oxygène, d'azote et/ou de soufre ou R⁶ et R⁷ forment ensemble un cycle insaturé, saturé ou aromatique et le cas échéant interrompu par un ou plusieurs atomes d'oxygène et/ou de soufre et/ou par un ou plusieurs groupes imino substitués ou non substitués, les radicaux mentionnés pouvant en outre être substitués à chaque fois par des groupes fonctionnels, aryle, alkyle, aryloxy, alkyloxy, halogène, des hétéroatomes et/ou des hétérocycles, avec de l'oxyde d'éthylène, de l'oxyde de propylène de l'oxyde d'iso-butylène, du vinyloxirane et/ou de l'oxyde de styrène.

11. Procédé selon la revendication 10, **caractérisé en ce que** les poly(oxyde d'alkylène)polyétheralcools monovalents présentent en moyenne statistique au moins 2 unités d'oxyde d'alkylène.

12. Procédé selon la revendication 10 ou 11, **caractérisé en ce que** les poly(oxyde d'alkylène)polyétheralcools monovalents présentent en moyenne statistique jusqu'à 50 unités d'oxyde d'alkylène.

13. Polyisocyanate dispersible dans l'eau, hautement fonctionnel, hautement ramifié ou hyperramifié, pouvant être obtenu selon l'une quelconque des revendications précédentes.

14. Utilisation d'un polyisocyanate dispersible dans l'eau, hautement fonctionnel, hautement ramifié ou hyperramifié selon la revendication 13 dans une dispersion de polyuréthane.

15. Dispersion de polyuréthane contenant au moins un polyisocyanate dispersible dans l'eau, hautement fonctionnel, hautement ramifié ou hyperramifié selon la revendication 13 ainsi que le cas échéant d'autres polyisocyanates présentant une viscosité allant jusqu'à 1200 mPa.s.

16. Agent de revêtement, contenant un polyisocyanate pouvant être émulsionné dans l'eau, hautement fonctionnel, hautement ramifié ou hyperramifié selon la revendication 13.

17. Utilisation des polyisocyanates dispersibles dans l'eau, hautement fonctionnels, hautement ramifiés ou hyperramifiés selon la revendication 13 comme éléments pour la préparation de laques, de revêtements, de revêtements de bobines, d'adhésifs, de masses d'étanchéité, d'élastomères coulés ou de mousses et de produits de polyaddition ainsi que pour l'imprégnation de cuir ou de textile.

18. Utilisation des agents de revêtement selon la revendication 16 comme couches de fond, charges, laques de recouvrement pigmentées et laques claires dans le domaine du laquage industriel, en particulier d'avions ou de grands véhicules, du laquage du bois, de voitures, en particulier du laquage de pièces détachées ou de réparation de voitures ou du laquage décoratif.
